# EUROPEAN PATENT APPLICATION

(11) **EP 4 492 636 A1**
(43) Date of publication of application: **15.01.2025**
(21) Application number: 23184449.9
(22) Date of filing: 10.07.2023
(51) Int. Cl.: H02K 1/18, H02K 3/24, H02K 15/12, H02K 9/197, H02K 15/02, H02K 21/24

(54) **MODULAR STATOR FOR AN AXIAL FLUX MACHINE**

(71) Applicant: Magnax, 8500 Kortrijk (BE)
(72) Inventor: Leijnen, Peter, 8500 Kortrijk (BE)
(74) Representative: IP HILLS NV

(57) **Abstract**

Method for manufacturing a stator of an axial flux machine, comprising:
- providing a ring-shaped intermediate structure (1000), comprising:
o stator elements (300) fixed in a skeleton;
o radial channels (1301), present between any pair of adjacent stator elements (300);

- providing a flow distributor (1500, 1900), the flow distributor (1500, 1900) and the intermediate structure (1000) being provided as separate parts;
- mounting the flow distributor (1500, 1900) on the inner (1006) or outer surface (1007) of the intermediate structure (1000), wherein:
o the flow distributor (1500, 1900) comprises a circumferential wall (1501, 1901), the circumferential wall comprising one or more recesses (1502, 1503, 1902), thereby defining at least one circumferential channel in fluid communication with one or more of the radial channels (1301), and
o the flow distributor (1500, 1900) is adapted to define a flow pattern when circulating a cooling fluid between the stator elements (300).

## Description

### Field of the Invention

The present invention generally relates to the field of axial flux machines. In particular, a stator and corresponding manufacturing method are presented, which enable an assembly with reduced complexity and increased flexibility, while allowing for a robust stator design and sufficient cooling.

### Background of the Invention

An axial flux machine is a type of electrical machine wherein a flux is generated in axial direction, the latter being the direction of the rotational axis. Typically, an axial flux machine comprises a disk- or ring-shaped rotor and stator, both having a central axis corresponding to the rotational axis of the machine, the stator and rotor being axially spaced apart by a narrow air gap. The rotor comprises magnetic material, typically permanent magnets, generating an axial magnetic flux. The stator comprises a plurality of coils in which currents may run. Typically, each of the stator coils is wound around a core made of ferromagnetic material, to direct and focus the magnetic flux. During motor operation, the rotor is driven by magnetic fields generated by the stator currents, while in generator condition currents are induced in the stator coils due to the rotation of the rotor. Different topologies are known for axial flux machines, for example comprising one rotor disk and one stator disk, one rotor disk and two stator disks, or two rotor disks positioned on both sides of a stator disk. The axial flux machine may be of the torus type, having a stator yoke, or may be of the yokeless type, not having a stator yoke.

The stator design of an axial flux machine raises some technical challenges. First, obtaining a high machine performance requires an effective cooling of the stator, wherein heat is optimally evacuated from the coils and cores. Moreover, durability and robustness of the stator need to be ensured, which may in particular be challenging with respect to a robust anchoring of the stator elements comprising the coils. Finally, the stator assembly process may be complex, thereby largely affecting the stator cost.

Cooling of the stator may be done in various ways. For example, in a high-performance axial flux machine, the stator may be liquid-cooled, wherein a cooling liquid is circulated inside a hollow stator housing, thereby directly submerging the coils in the cooling liquid. An example of such a high-performance liquid-cooled stator is given in EP3764526A1. The stator comprises an outer structure with a circumferential outer cooling channel, an inner structure with a circumferential inner cooling channel, and radially positioned guiding walls placed between respective pairs of coils. The stator housing further comprises two annular covers, each of them having apertures for receiving the respective core ends. A cooling fluid flows from the outer to the inner cooling channel and/or vice versa, thereby being circulated between the coils. Due to the guiding walls, the cooling fluid is forced against the respective coils, thereby allowing for an efficient heat evacuation. Different stator designs are presented, each enabling a specific flow pattern of the cooling fluid when being circulated in the stator housing.

The stator as presented in EP3764526A1 is typically manufactured by first moulding a clamshell, the clamshell comprising the outer and inner structure, the guiding walls and one of the annual covers. Next, coils are placed in the clamshell and the second annular cover is placed on top of the clamshell. Finally, the cores - any of them provided as two core halves - are inserted through the apertures in the annular covers, and the respective core halves are connected to one another. The manufacturing method thus requires split cores, thereby increasing complexity of the assembly process and possibly inducing risks with respect to robustness or electromagnetic performance. Moreover, the stator housing needs to be perfectly fluid tight to prevent leakage of the cooling liquid. However, sealing the cores with respect to the housing, and sealing the annular cover with respect to the clamshell may be challenging, and further increases the complexity of the manufacturing process. Furthermore, difficulties may arise with respect to durably anchoring the stator elements. In particular, the coils may tend to vibrate during operation of the machine, such that insulation of the coil wires wears off. Finally, the manufacturing method does not allow for flexibly adapting the design according to a desired flow pattern: if a particular application or use requires another flow pattern of the cooling fluid, another specific mould is needed for making the clamshell according to the specific design.

WO2012/022974A1 discloses a liquid-cooled stator, wherein the housing is composed of two clamshells. The clamshells are moulded in a mould and, prior to moulding, the shoes of the core halves are located in spaces in the mould. When plastics is injected into the mould, the pole shoes are fixed to the respective clamshells due to overmoulding. After moulding, the clamshells are mated together and adhesive further bonds the faces of the core halves together. Just like in EP3764526A1, the method requires split cores, and sealing of the two clamshells may be challenging. Moreover, even though the pole shoes of the cores are overmoulded in WO2012/022974A1, coils may still tend to vibrate, thereby impacting the durability of the machine. Finally, WO2012/022974A1 does not offer a solution to change the flow pattern of the cooling flow according to specific needs.

It is an objective of the present invention to disclose a stator for an axial flux machine, and a corresponding manufacturing method, that resolves one or more of the above-described shortcomings of the prior art solutions. More particularly, it is an objective to present a stator and manufacturing method, enabling an assembly with reduced complexity and increased flexibility, while allowing for a robust stator design and sufficient cooling.

### Summary of the Invention

According to a first aspect of the present invention, the above identified objectives are realized by a method for manufacturing a structure for a stator of an axial flux machine, the method comprising:
- providing a mould, the mould comprising:
   o a static portion comprising an outer wall and a coaxially arranged inner wall, with a ring-shaped space therebetween, the ring-shaped space defining an axial and radial direction;
   o movable spacers, any of the spacers comprising an elongated portion that extends in radial direction when mounted in the mould;
- positioning stator elements in the ring-shaped space of the mould, any of the stator elements comprising a coil wound around a core;
- sliding the spacers in radial direction such that the respective elongated portion is inserted between a pair of adjacent stator elements, and radially compressing the stator elements, thereby reducing gaps between the coils and the elongated portion of respective spacers and/or compressing the wires of respective coils;
- applying an injection moulding process, such that the stator elements are overmoulded, thereby obtaining the structure, the structure comprising channels in between the stator elements defined by the elongated portions of respective spacers.

An axial flux machine may equally be referred to as, for example, an axial airgap electric motor or generator, or an axial flux permanent magnet machine. An axial flux machine is a type of electrical machine wherein a flux is generated in axial direction, the latter being the direction of the rotational axis. Typically, the machine is suited to operate as a motor and as a generator, depending on the working condition. The axial flux machine has at least one stator and at least one rotor. The rotor comprises magnetic material, typically permanent magnets, generating an axial magnetic flux. During operation, the stator remains stationary, while the rotor, being mounted on the shaft, rotates during operation of the machine. Typically, the stator and rotor each comprise a disk- or ring-shaped component, referred to as a stator disk respectively rotor disk. The stator disk and rotor disk are axially spaced apart by a narrow air gap. Different topologies are possible. For example, the machine may comprise one rotor disk and one stator disk, one rotor disk and two stator disks, or two rotor disks and one stator disk. The axial flux machine may be of the torus type, having a stator yoke, or may be of the YASA type, not having a stator yoke. The latter machine is also referred to as, for example, a yokeless and segmented armature (YASA) motor or generator, or simply a yokeless axial flux machine.

The stator of an axial flux machine comprises a plurality of stator elements, of which the arrangement is typically rotationally symmetrical with respect to the central axis. Every stator element comprises a coil and a core made of ferromagnetic material, each coil having a central axis in axial direction. A coil comprises a plurality of turns, wound around the ferromagnetic core. Typically, a coil comprises a front face connected to a first side face, a first side face connected to a back face, a back face connected to a second side face, and a second side face connected to the front face. The front face is defined as the coil surface directed towards the centre of the stator, while the back face opposed the front face. The two sides of a coil facing another adjacent coil are referred to as the side faces of the coil. The cores may comprise an elongated central part, e.g. referred to as core bar, and pole shoes, positioned at both opposing ends of the core bar. During motor operation, the rotor is driven by magnetic fields generated by stator currents running in the coils, while in generator condition currents are induced in the stator coils due to the rotation of the rotor.

The first aspect of the invention concerns a method for manufacturing a structure for a stator of an axial flux machine. The manufacturing method thus results in a structure, wherein this structure - after further assembly - will make part of the final stator, or this structure may correspond to the stator itself. In other words, after assembly of the machine, the structure obtained by the method is comprised in the stator. The structure may e.g. be referred to as an intermediate structure, wherein during assembly of the stator, one or more additional components will be mounted onto such intermediate structure.

The manufacturing method makes use of a mould, suitable for injection moulding. The mould comprises a static portion, meaning that this portion will not be intentionally moved during execution of the method. The static portion comprises an outer wall and a coaxially arranged inner wall, with a ring-shaped space therebetween. Typically, the outer and inner wall have a cylindrical inner and/or outer surface, wherein recesses, holes or protrusions may be present. The axial and radial direction defined by the ring-shaped space correspond to respectively the axial and radial direction of the stator that will be obtained by the method.

The mould further comprises movable spacers, any of the spacers comprising an elongated portion that extends in radial direction when mounted in the mould. Thus, any of the spacers is movable with respect to the static portion of the mould, thereby sliding the elongated portion in radial direction. A spacer has a front side being defined as the end that first enters the ring-shaped space when the spacer is slid in radial direction. The front and back side of a spacer are thus defined with respect to the direction wherein the spacer is slid. The elongated portion is for example provided as a bar having flat side faces parallel to the axial direction, the flat side faces being mutually parallel or converging. For example, the elongated portion is substantially square-shaped, with flat side faces parallel to the axial and radial direction. The front side of the elongated portion may be a flat surface, or may be rounded, tapered or chamfered. Apart from the elongated portion, a spacer may comprise other parts, for example an end portion attached to the back side of the elongated portion.

Typically, the outer and/or inner wall of the mould comprises holes, distributed over the circumference of the wall, each of the holes being adapted to receive a movable spacer. A spacer thus passes through one of the holes when being slid in radial direction. The elongated portion of the spacers may be inserted into the ring-shaped space via the outer wall, thus sliding from the outer wall towards the inner wall of the mould when being moved in radial direction, or may be inserted via the inner wall, thus sliding from the inner wall towards the outer wall when being moved in radial direction. Moving a spacer typically happens by pushing against the back end of the spacer.

Typically, at the start of the manufacturing method, all the spacers are in a retracted position, wherein the elongated portions are completely or largely retracted from the ring-shaped space of the mould. Thus, the space between the outer and inner wall of the mould is completely or mainly empty. As a first step in the manufacturing method, multiple stator elements are positioned in the ring-shaped space of the mould. Any of the stator elements is positioned with its front face directed towards the inner wall of the mould, its back face directed towards the outer wall of the mould, and its side faces directed towards another stator element. Typically, the stator elements are arranged rotationally symmetrical with respect to the central axis of the mould.

As a next step in the manufacturing method, the spacers are slid in radial direction, wherein the respective elongated portion is inserted between a pair of adjacent stator elements, and subsequently the stator elements are radially compressed. The effect of this step is that gaps between the coils and the elongated portion of respective spacers are reduced, and/or that the wires of respective coils are compressed, thereby minimizing gaps between the wires. Sliding a spacer in radial direction may be done from the outer wall of the mould towards the inner wall or vice versa, wherein in both cases the elongated portion is inserted between the two neighbouring stator elements. Typically, sliding the spacer in radial direction happens in a single plane, without changing the axial position of the spacer. Radially compressing the stator elements refers to pushing the stator elements in radial direction, which will typically happen radially inwards, i.e. in a direction from the outer to the inner wall. For example, radially compressing the stator elements may happen by means of a movable mould part, e.g. an end portion of the spacer attached to the back side of the elongated portion. In another embodiment, radially compressing the stator elements may happen by separate parts that are pushed against the stator elements, those parts being separate from the spacers.

When sliding a spacer, the elongated portion moves forward between two adjacent stator elements. This may happen without any contact between the elongated portion of the spacer and the coils, thereby avoiding any damage to the coatings of the coil wires. In another embodiment, there may be contact between the elongated portion of the spacer and the coils when the elongated portion is inserted, the elongated portion thus being forced between two adjacent coils. In this case, it may be advantageous that the elongated portion has a rounded, tapered or chamfered tip, such that the elongated portion may easily be inserted with minimal risk to damage the coating of the coil wires. When the elongated portion is in contact with the coils during insertion, the wires of the coils may be compressed during the insertion of the elongated portion, such that the wires are pushed together and the side of a coil is pushed against the respective core.

In an embodiment, stator elements are positioned movably with respect to the static portion of the mould. In this case, radially compressing the stator elements may result in the stator elements being slightly moved towards the centre of the ring-shaped space, such that the mutual distance between adjacent stator elements is slightly reduced. This will - in case the coils were not yet in contact with the elongated portions of the spacers during insertion - result in the side faces of the coils being brought into contact with the elongated portion of the spacers, thus eliminating or minimizing any gaps between the coils and the elongated portion of respective spacers. In case the coils were already in contact with the elongated portion of the spacers, reducing the mutual distance between adjacent coils will result in compressing the wires of the coils, thereby pushing the wires together and forcing the coil into a shape wherein any gaps between the respective coils and cores are eliminated or minimized. Also a combination of both effects may occur in an embodiment with movable stator elements, wherein radially compressing the stator elements results in first the gaps between the coils and the elongated portion of respective spacers being reduced and next the wires of respective coils being compressed, the latter minimizing the gaps between the wires.

In another embodiment, the stator elements are fixed in the mould, such that they cannot be moved when radially compressing the stator elements. In this case, the elongated portions are first forced between the fixed stator elements, the elongated portion thus being in contact with the coils, thereby already compressing the wires of coils to some extent during insertion of the elongated elements. Next, during radially compressing the stator elements, the compression of the coil wires is continued. Thus, in this embodiment with fixed stator elements, during inserting as well as radially compressing, the wires are pushed together and the coil is forced into a shape wherein any gaps between the wires and/or between the respective coils and cores are eliminated or minimized.

After positioning the stator elements, inserting the elongated portions, and radially compressing the stator elements, some empty regions remain in the ring-shaped space of the mould. As a next step in the manufacturing method, an injection moulding process is applied, wherein molten material, e.g. molten plastics, is injected into the mould, thereby filling the empty regions in the ring-shaped space with injected material. In particular, empty regions at an axial position above and underneath the spacers is filled with material, such that a top and bottom part - which may serve as top and bottom cover - are formed. Moreover, during injection, the injected material is brought into contact with portions of the stator elements, such that the stator elements are overmoulded with the injected material. After solidification of the injected material, the spacers may be retracted, and the obtained structure may be removed from the mould.

The obtained structure comprises a moulded skeleton, and stator elements being fixed in the skeleton due to overmoulding. Thus, the stator elements are, at certain spots, fixed to the solidified injected material. For example, the pole shoes of the stator elements may be fixed to the top and bottom part of the skeleton, the front and/or back faces of all or some of the coils may be fully or partly fixed to the skeleton, and/or the side faces of the coils may be fully or partly fixed to the skeleton. The structure further comprises channels in between the stator elements, the channels being formed due to the space taken by the elongated portions of the spacers during injection moulding. In the final stator, these channels will serve as cooling channels, for circulating a cooling fluid between the stator elements. For this purpose, additional components may be mounted on the obtained structure during assembly of the stator, e.g. for defining a particular flow pattern of the cooling fluid.

The invention goes along with multiple advantages. Firstly, before starting the injection moulding process, the stator elements are brought into a condition wherein the wires of the coils are compressed, the windings thus being forced into a compacted shape with minimized gaps between the wires. This has the advantage that in the obtained stator structure, a higher copper fill factor is realised.

Secondly, before starting the injection moulding process, any gaps between the spacers and respective coils are minimized or eliminated, as the side faces of the coils are pushed against the elongated portions of the spacers. In this way, no injected material, or only a limited amount thereof, may enter between a side face of a coil and the adjacent elongated portion of a spacer. As a result, the side faces of the coils remain free of injected material, or only a thin layer of injected material covers the side faces. Consequently, the formed cooling channels are delimited by the side faces of the coils, or are delimited by the thin layers of solidified injected material present on the side faces of the coils. As a result, when a cooling fluid will be circulated in the channels, a direct or quasi direct contact between the cooling fluid and the coils exists, thereby allowing for an optimal heat extraction from the stator elements. Also remark that such an absence of injected material at the coil sides, or only a thin layer, would be hard to reach when using a completely static mould: when static mould partitions would be used to define the channels, inserting the coils between these mould partitions would need to be done in the axial direction, with minimal clearances between a coil and corresponding partitions. This would either require a very small dimensional tolerance of the coils, or it would require the coils to be axially pressed in between the mould partitions, which would lead to substantial damage to the coils. Conversely, in the invented method, the movable spacers of the mould allow for cooling channels not delimited by thick layers of injected material, while at the same time minimizing the risk of damaging the coils during the manufacturing method. This advantage is obtained even when substantial tolerances exist with respect to the stator element dimensions.

Furthermore, compared to the clamshell methods disclosed in the prior art, the invented manufacturing method allows for a less expensive production of the stator due to less manufacturing steps, an easier assembly, and less restrictive tolerances. In particular, since the top and bottom part of the skeleton, these parts serving as cover plates, are moulded during the injection moulding process, there is - different from prior art clamshell methods - no assembly step for mounting two clamshells against one another or for mounting an annular cover plate onto a clamshell. Adhesives for sealing between a clamshell and annular cover, or between two clamshells are thus eliminated, thereby contributing to an easier assembly and improved sealing of the stator.

Moreover, the invented method also allows to use single-piece cores, thereby further reducing the complexity of assembly and avoiding problems with respect to robustness or electromagnetic performance of the cores. Finally, the invented method contributes to robust anchoring of the stator elements, as the stator elements are encapsulated in the moulded material due to overmoulding. The risk of wearing off the coil wires insulation due to vibration of the coils is thus reduced, thereby contributing to an increased overall robustness and durability of the machine.

Optionally, the stator elements are positioned movably with respect to the static portion of the mould, when being positioned in the ring-shaped space of the mould, before inserting the elongated portions of the movable spacers. This implies that the stator elements are positioned in the ring-shaped space of the mould in such a way that their position is not fixed with respect to the static portion of the mould. Typically, the position of the stator elements will be changed due to radially compressing the stator elements, while during prior insertion of the elongated portion the position of the stator elements is not changed. It is possible, however, that during insertion of the elongated portions, the wires of the coils are compressed, thereby causing movement in the coils, without changing the position of the stator elements. When radially compressing the stator elements, thereby pushing the stator elements towards the centre of the ring-shaped space, the stator elements will slightly move towards the centre. In this way, the mutual distance between adjacent stator elements, measured in tangential direction, is slightly reduced.

In an embodiment, reducing this mutual distance causes any gaps between the coils and the elongated portion of respective spacers to be eliminated or minimised. In another embodiment, reducing the mutual distance between adjacent stator elements results in compression of the wires of the coils, thereby pushing the wires together and forcing the coil into a shape wherein any gaps between the wires and/or between respective coils and cores are eliminated or minimized. In yet another embodiment, a combination of the two aforementioned effects occurs, i.e. first the gaps between the coils and the elongated portion of respective spacers are reduced and next the wires of respective coils are compressed.

Having movable stator elements has the advantage that during insertion of the spacers, sufficient space is available between adjacent coils to insert the elongated portions without damaging the coils, or with a minimal risk to such damage. Next, during the subsequent radial compression of the stator elements, the stator elements are slightly moved towards the centre, thereby bringing the stator elements in an optimal condition before starting the injection moulding. In this, the optimal condition refers to gaps between coils and spacers being reduced, and coil wires being compressed. As a result, the reduced risk of damaging the coil wires is combined with a good cooling performance due to thin layers of moulded material at the coil side faces, and combined with obtaining a high copper fill factor.

Optionally, the stator elements are compressed radially by means of movable mould parts, that are pressed radially inwards. This means that movable mould parts are available, which, when being pressed radially inwards, cause a force exerted on the stator elements, thereby radially compressing the stator elements. For example, the movable mould parts are slid in radial direction, from the outer wall towards the inner wall. In an embodiment, the movable mould parts are comprised in the movable spacers, the movable mould parts e.g. provided as end portions connected to the back side of respective elongated portions. In this case, radially sliding a spacer results in radially sliding the elongated portion as well as the end portion serving as movable mould part. In another embodiment, the movable mould parts are separate elements, not being connected to the elongated portions. For example, the elongated portions may first be inserted between the stator elements, from the outer wall or from the inner wall, and afterwards other elements are used for pressing the stator elements radially inwards.

Optionally, any of the spacers comprises an end portion connected to the elongated portion, the end portion comprising a front face directed towards the elongated portion, and the elongated portion protruding from the front face, such that, when sliding the spacer in radial direction, the front face of the end portion is brought into contact with at least one of the coils. The end portion is attached to the back side of the elongated portion, and typically extends at least in tangential or circumferential direction. When sliding the spacer in radial direction, either from the outer wall of the mould or from the inner wall of the mould, the elongated portion moves forward between a pair of coils, until the end portion comes into contact with one of the coils or both of the coils. In the structure obtained after injection moulding, the end portions will thus define the end shape of the respective cooling channels.

Optionally, the method further comprises: pressing the end portion of each of the spacers radially inwards, such that the front face of any of the end portions pushes against at least one of the stator elements, thereby radially compressing the stator elements. This implies that a force is exerted onto the end portion of a spacer, thereby sliding the spacer radially inwards. As the front face of the end portion comes into contact with one or both of the neighbouring coils, further pressing the end portions radially inwards results in pressing the stator elements radially inwards, and thus radially compressing the stator elements. Thus, the end portions of the spacers do not only serve to define the end shape of the cooling channels, but also serve as compression elements for radially compressing the stator elements.

Optionally, the front face of an end portion comprises at least one curved surface, having a shape adapted to conform to a rounded edge of a coil when bringing the end portion into contact with the respective coil. Typically, a coil comprises four edges, in its four corners, an edge positioned between respectively the front face and the first side face, the first side face and the back face, the back face and the second side face, and the second side face and the front face. Typically, these edges are rounded, meaning that the edges are not sharp but curved. The front face of the end portion of a spacer comprises a curved surface, of which the shape is adapted to the rounded edges at the back side of the coil. As a result, when the end portion of a spacer is brought into contact with the coil, the front face of the end portion abuts against the coil. In particular, the curved surface of the end portion is positioned around the rounded edge of the coil, thereby being complementary with the shape of the edge where the side face of the coil is connected to the back face. In an embodiment, the front face of each end portion may comprise two curved surfaces, positioned at opposing sides of the elongated portion, wherein the shape of each of the curved surfaces is adapted to conform to a rounded edge of a coil when bringing the end portion into contact with the respective pair of coils. Due to the presence of this complementary surface at the front of the end portions, the moulding process results in cooling channels being funnel-shaped at one of their ends, the funnel-shaped channels having curved surfaces at one of their ends. In this way, an optimal shape of the cooling channels is obtained, wherein - apart from the coil side faces - also a portion of the back or front face of the coil is only covered with a thin layer of moulded material, or is completely free of such material. This results in a coil area being maximally exposed to the cooling fluid during operation of the machine.

Optionally, the outer wall of the mould comprises holes, arranged over the circumference of the outer wall, each of the spacers passing through one of the holes when sliding in radial direction. Each of the holes in the outer wall is thus adapted to receive a spacer, and during sliding a spacer, the latter is slid through the corresponding hole in the outer wall. Various shapes of the holes may be used. For example, any of the holes in the outer wall may be delimited by a flat top surface and a flat bottom surface, both surfaces being perpendicular to the axial direction. In this way, a spacer, also having a flat top and bottom surface, may be held in a fixed axial position when being slid in radial direction.

Optionally, the mould comprises multiple spacers arranged over the circumference of the mould, the end portions of adjacent spacers being spaced apart, such that the ring-shaped space comprises a cavity between adjacent end portions after inserting the spacers and before starting the injection moulding process. This implies that after sliding all spacers in radial direction, the end portions of neighbouring spacers are still at a distance from each other. In other words, even at their maximally inserted position, the end portions of all the spacers do not define a closed circumference. Thus, before starting the injection moulding process, empty spaces remain between neighbouring end portions. After injection moulding, these empty spaces result in vertical wall parts of molded material, the vertical wall parts extending in axial direction and circumferential direction and connecting the top and bottom part of the moulded skeleton. The vertical wall parts are spaced apart from one another, leaving an opening between adjacent vertical wall parts, and any of the radial cooling channels ends in an opening between adjacent radial wall parts. At the position of the vertical wall parts, the back side of the coils is fixed to the skeleton due to overmoulding. The presence of such wall parts thus contributes to a robust anchoring of the stator elements, and a robust connection between the top and bottom of the moulded skeleton.

Optionally, the height of the elongated portion of each of the spacers, measured in axial direction, is smaller than the height of the outer and inner wall of the mould, such that the ring-shaped space comprises a cavity above and underneath each of the elongated portions after inserting the spacers and before starting the injection moulding process. Thus, the spacers are positioned centrally in height, with respect to the axial direction of the mould. During injection moulding, the empty spaces above and underneath the spacers are filled with moulded material, thereby forming a top and bottom part of the moulded skeleton structure. The top and bottom part serve as a top and bottom cover plate of the stator. However, due to the invented manufacturing method, these cover plates form a unity with the rest of the moulded skeleton structure, and are not provided as separately moulded parts that need to be assembled afterwards. Moulding the top and bottom part together with the rest of the moulded skeleton, has the advantage that no adhesives or others measures are needed to ensure sealing at the place where the cover plate is mounted. It also results in an easier and thus cheaper assembly process.

Optionally, the spacers are slid in radial direction until an outer end of the elongated portion abuts against the inner wall of the mould, before starting the injection moulding process. For example, the inner wall comprises a continuous cylindrical surface facing the ring-shaped space of the mould. In the manufacturing method, the elongated portions are slid in radial direction, until the front side of the elongated portions touches the cylindrical inner surface of the inner wall. Thus, upon starting the injection moulding, no empty space is left between the front side of an elongated portion and the inner wall. As a result, in the obtained moulded structure, the formed radial cooling channels have an open end at the inside of the ring-shaped structure. Typically, when assembling the stator, an additional component will be mounted onto the inside of the moulded ring-shaped structure, for defining the flow pattern of the cooling fluid when being circulated through the radial cooling channels.

Optionally, the static portion of the mould comprises one or more circumferential walls, placed in the ring-shaped space and arranged coaxially with the inner and outer wall, and the spacers are slid in radial direction until an outer end of the elongated portion abuts against one of the circumferential walls, before starting the injection moulding process. A single continuous circumferential wall may be present, or multiple separated circumferential walls may be present together forming a segmented wall. In an embodiment, the one or more circumferential walls are positioned closer to the inner wall of the mould than to the outer wall, leaving a small distance between the circumferential wall and the inner wall, and a larger distance between the circumferential wall and the outer wall. In the manufacturing method, the elongated portions are slid in radial direction, until the front side of the elongated portions touches a circumferential wall. Thus, upon starting the injection moulding, no empty space is left between the front side of an elongated portion and a circumferential wall. Due to the space taken by the circumferential wall(s) in the mould, the obtained moulded structure comprises one or more circumferential channels, being in connection with the radial cooling channels. On the other hand, upon starting the injection moulding, an empty space is left between the circumferential wall(s) and the inner wall of the mould, resulting in a circumferential wall in the obtained moulded structure, e.g. positioned at the inner side of the ring-shaped moulded structure. As during the injection moulding, a circumferential wall and one or more circumferential channels are already moulded together with the rest of the structure, no additional component needs to be mounted afterwards on the inner side of the moulded structure, for defining a specific flow pattern. This further contributes to an easier and cheaper assembly. A similar reasoning applies when the one or more circumferential walls of the mould are positioned closer to the outer wall of the mould than to the inner wall of the mould, thereby forming an outer circumferential wall in the obtained structure and corresponding circumferential channel(s).

Optionally, the injection moulding process further comprises:
- injecting a liquid material into the mould, and
- solidifying the material, thereby obtaining an injection-moulded skeleton;
and the manufacturing method further comprises:
- retracting the spacers from between the stator elements, after solidifying the material;
- removing the obtained structure from the mould, wherein the structure comprises the skeleton and the stator elements, the stator elements being fixed in the skeleton due to overmoulding.
The injected material may be a thermoplastic material, e.g. plastics, or a thermoset, e.g. phenolic resin or epoxy resin.

Optionally, the injected material is a thermoplastic material. In general, moulding with a thermoplastic material such as plastics is less accurate, resulting in wider tolerances on the obtained dimensions than is the case when a thermosetting material such as phenolic resin or epoxy resin is used. However, due to the invented manufacturing method, no strict tolerances are required for the moulded structure, such that a thermoplastic material can be used for injection moulding. On the other hand, moulding with a thermoplastic material has the advantage that laser welding can be used for connecting an additional component to the moulded structure, whereas a moulded structure made from a thermoset does not allow for laser welding. Laser welding is advantageous, as it allows for an easy connection while ensuring optimal sealing.

Optionally, the manufacturing method further comprises: after removing the structure from the mould, fully or partially removing solidified overmoulded material from the coils. This concerns a postprocessing step, applied after removing the injection moulded structure from the mould. In an embodiment, solidified injected material may be removed from the curved edges of the coils. Alternatively or additionally, solidified material present in the radial cooling channels, at the coil side faces may be removed. The advantage of such postprocessing is that the layer of solidified moulded material, covering portions of the coils after injection moulding, is removed or is made thinner. This results in a better exposure to cooling fluid during used of the machine.

Optionally, solidified material is removed from the coils by means of mechanical abrasion and/or laser ablation and/or machining. Mechanical abrasion refers to the use of abrasive particles for grinding the solidified material, e.g. in a sand blasting. In particular, for removing material from the side faces of the coils, particles may be blown into the radial channels of the moulded structure. Laser ablation or laser stripping refers to the use of laser radiation to remove stuck material. Machining e.g. refers to the use of a knife or milling to remove solidified material.

Optionally, the outer and/or inner surface of the obtained moulded structure may be machined after the moulding process, e.g. if the obtained dimensions are not within allowed tolerances.

According to a second aspect of the present invention, a method for manufacturing a stator for an axial flux machine is provided, the method comprising:
- manufacturing a structure by the method according to the first aspect of the invention, the structure being a ring-shaped intermediate structure comprising stator elements fixed in an injection-moulded skeleton due to overmoulding, and a radial channel between any pair of adjacent stator elements; and
- mounting a flow distributor on the inner or outer surface of the intermediate structure, wherein:
   ∘ the flow distributor comprises a circumferential wall arranged coaxially with respect to the intermediate structure when mounted, the circumferential wall comprising one or more recesses, thereby defining at least one circumferential channel in fluid communication with one or more of the radial channels, and
   ∘ the flow distributor is adapted to define a flow pattern across the radial and circumferential channels when circulating a cooling fluid between the stator elements.

Thus, the method for manufacturing a stator comprises first manufacturing an intermediate structure according to the first aspect of the invention, and next mounting a flow distributor. The intermediate structure is ring-shaped and comprises an outer and inner surface. The outer surface refers to a surface extending in circumferential and axial direction, which due to the injection moulding process was formed in proximity of the outer wall of the mould. The inner surface refers to a surface extending in circumferential and axial direction, which due to the injection moulding process was formed in proximity of the inner wall of the mould. Typically, the inner and outer surface correspond to a cylindrical surface, wherein holes, protrusions, recesses, etc. may be present. Apart from the outer and inner surface, the intermediate structure typically comprises a flat top and bottom surface, both being perpendicular to the axial direction. The intermediate structure further comprises the overmoulded stator elements, and radial channels serving as cooling channels. A radial channel is present between any pair of adjacent stator elements.

The flow distributor is a separate component, produced by a process other than the manufacturing method according to the first aspect of the invention. After obtaining the intermediate structure and the flow distributor, the latter is mounted onto the intermediate structure. In an embodiment, a flow distributor is mounted onto the outer surface of the intermediate structure, while no flow distributor is mounted onto the inner surface of the intermediate structure. In another embodiment, a flow distributor is mounted onto the inner surface of the intermediate structure, while no flow distributor is mounted onto the outer surface of the intermediate structure. In yet another embodiment, two flow distributors are provided, wherein one of them is mounted onto the outer surface of the intermediate structure, and the other one is mounted onto the inner surface of the intermediate structure.

Typically the flow distributor is a ring-shaped component comprising a circumferential wall, which is coaxial with respect to the ring-shaped intermediate structure when being mounted onto the structure. The circumferential wall of the flow distributor comprises one or more recesses. For example, the recesses are provided as two circumferential channels, both circumferential channels placed at different axial positions, and each forming a continuous channel over the complete circumference. In another embodiment, the recesses are provided as a segmented circumferential channel, wherein multiple channels portions are separated from one another due to protrusions or

partitions provided at the circumferential wall. In any case, after mounting the flow distributor onto the intermediate structure, the circumferential channels are in fluid communication with the radial channels. This implies that a cooling fluid flowing in a radial channel may enter a circumferential channel and vice versa. For this purpose, in an embodiment, apertures may be provided in the circumferential wall of the flow distributor. Thus, by mounting the flow distributor onto the intermediate structure, the radial channels and circumferential channels together define a path to be followed by a cooling fluid, wherein the cooling fluid will flow in radial direction through the radial channels and in tangential direction through the circumferential channels.

In this way, the flow distributor defines the flow pattern of the cooling fluid across the radial and circumferential channels when circulating a cooling fluid between the stator elements. The advantage of first manufacturing the intermediate structure, and next mounting a flow distributor, is that the intended flow pattern can easily be changed by merely switching to another type of flow distributor, while still having the same intermediate structure. This modular solution contributes to an increased flexibility in the stator production process, wherein according to specific needs, the flow pattern may be changed by simply switching to another type of flow distributor. The intermediate structure, however, may always be manufactured according to the same process, such that a bulk production and corresponding large stock are possible. Finally, another advantage is that an easier an improved sealing is obtained, wherein only seals at the edge between the intermediate structure and the flow distributor needs to be provided, thereby contributing to an easier stator assembly and increased durability of the machine.

According to a third aspect of the present invention, the above identified objectives are realized by a stator for an axial flux machine, the stator comprising a ring-shaped intermediate structure, and the intermediate structure comprising:
- a central axis corresponding to the axial direction;
- an injection-moulded skeleton, wherein the skeleton is provided as a single moulded part;
- stator elements, any of the stator elements comprising a coil wound around a core, wherein the stator elements are fixed in the skeleton due to overmoulding;
- radial channels, a radial channel being present between any pair of adjacent stator elements,
wherein:
- the skeleton comprises:
   ∘ a ring-shaped top part and bottom part, both parts being parallel and being orthogonal with respect to the axial direction;
   ∘ multiple wall parts, any of the wall parts extending in axial direction and connecting the top part to the bottom part, the wall parts being spaced apart from one another, leaving an opening between adjacent wall parts, and,
- each of the radial channels is delimited by the top and bottom part of the skeleton, and ends in an opening between adjacent wall parts.

The intermediate structure comprised in the stator may be obtained by the manufacturing method according to the first aspect of the invention. In another embodiment, the intermediate structure is obtained by another manufacturing method. In any case, the injection-moulded skeleton is provided as a single moulded part, i.e. it was obtained from a single injection moulding process, thus not being assembled from multiple individually moulded parts. The skeleton comprises a top and bottom part, and vertical wall parts connecting the top and bottom part. As the top and bottom parts are moulded together with the rest of the intermediate structure, no adhesives or other measures are required for sealing the top or bottom part with respect to the rest of the structure, thereby resulting in an improved sealing.

The stator elements are fixed to skeleton due to overmoulding, at certain spots. In particular, the pole shoes of the stator elements may be fixed to the top and bottom part of the skeleton, the back side of the stator elements may be partly fixed to the respective wall parts of the skeleton, and the front side of some or all of the stator elements may be fixed to an inner wall of the skeleton. In an embodiment, the side faces of the coils are covered with a layer of solidified injected material. Typically such layer has a smaller thickness than the thickness of the vertical wall parts. Additionally, also the back side and front side of the coils may be covered with solidified injected material. In this case, the stator elements are fully encapsulated by moulded material, thereby ensuring an improved anchoring of the stator elements than when e.g. only the pole shoes would be overmoulded.

In an embodiment, a first side of the radial channel ends in an opening between adjacent wall parts, and the opposing side of the radial channel ends in an opening at the inner or outer surface of the skeleton. In this case, any of the radial channels in the intermediate structure has two open ends. In another embodiment, a first side of the radial channel ends in an opening between adjacent wall parts, and the opposing side of the radial channel ends in a circumferential channel of the intermediate structure.

Optionally, each of the radial channels is funnel-shaped at least at one of its outer ends, the channel having an increasing width, towards the inner and/or outer circumference of the intermediate structure. The skeleton thus comprises radial channels which are narrow at the position between the side faces of the coils, and which become wider towards the outer and/or inner circumference. As a result, not only the side faces of the coils are optimally exposed to the cooling fluid, but also portions of the back and/or front faces of the coil. This contributes to improving the heat extraction from the stator elements.

According to a fourth independent aspect of the present invention, the above identified objectives are realized by a method for manufacturing a stator of an axial flux machine, the method comprising:
- providing a ring-shaped intermediate structure, the intermediate structure comprising:
   ∘ a central axis corresponding to the axial direction;
   ∘ stator elements, any of the stator elements comprising a coil wound around a core, the stator elements being fixed in a skeleton;
   ∘ radial channels, wherein a radial channel is present between any pair of adjacent stator elements;
- providing a flow distributor, the flow distributor and the intermediate structure being provided as separate parts;
- mounting the flow distributor on the inner or outer surface of the intermediate structure, wherein:
   ∘ the flow distributor comprises a circumferential wall arranged coaxially with respect to the intermediate structure when mounted, the circumferential wall comprising one or more recesses, thereby defining at least one circumferential channel in fluid communication with one or more of the radial channels, and
   ∘ the flow distributor is adapted to define a flow pattern across the radial and circumferential channels when circulating a cooling fluid between the stator elements.

The method for manufacturing a stator according to the fourth aspect comprises providing a ring-shaped intermediate structure, and next mounting a flow distributor on the intermediate structure. With respect to the ring-shaped intermediate structure and the flow distributor mentioned with respect to the method according to the fourth aspect, the same definitions apply as above given with respect to the first, second and third aspect of the invention.

The ring-shaped intermediate structure may be manufactured by the method according to the first aspect of the invention, or by any other method, e.g. by overmoulding the stator elements using a static mould, by injection moulding only the skeleton and mounting the stator elements afterwards, by casting the stator elements in a resin, etc. The method according to the fouth aspect of the invention is therefore independent from the method according to the first aspect of the invention and independent from the method according to the second aspect of the invention.

The provided ring-shaped intermediate structure comprises stator elements fixed in a skeleton, meaning that the stator elements are securely positioned in the skeleton. Fixation may e.g. be established via overmoulding, gluing, fasteners, a mechanical design, a resin, etc. Typically, the skeleton comprises a ring-shaped top part and bottom part, both parts being parallel and being orthogonal with respect to the axial direction. Optionally, the skeleton comprises multiple wall parts, any of the wall parts extending in axial direction and connecting the top part to the bottom part, the wall parts being spaced apart from one another, leaving an opening between adjacent wall parts. The intermediate structure comprises radial channels, wherein a radial channel is present between any pair of adjacent stator elements. For example, each of the radial channels is delimited by the top and bottom part of the skeleton, and ends in an opening between adjacent wall parts. In an embodiment, a first side of the radial channel ends in an opening between adjacent wall parts, and the opposing side of the radial channel ends in an opening at the inner or outer surface of the skeleton. In another embodiment, a first side of the radial channel ends in an opening between adjacent wall parts, and the opposing side of the radial channel ends in a circumferential channel of the intermediate structure. Optionally, each of the radial channels is funnel-shaped at least at one of its outer ends, the channel having an increasing width, towards the inner and/or outer circumference of the intermediate structure.

The intermediate structure and the flow distributor are provided as separate parts, i.e. the flow distributor is produced separately, by a process other than the process wherein the intermediate structure is made. After obtaining the intermediate structure and the flow distributor, the latter is mounted onto the intermediate structure. The flow distributor may be mounted onto the outer surface of the intermediate structure, or may be mounted onto the inner surface of the intermediate structure. In an embodiment, two different flow distributors may be provided, of which one is mounted onto the outer surface and one is mounted onto the inner surface.

Typically, the flow distributor is a ring-shaped component comprising a circumferential wall, the circumferential wall comprising one or more recesses, and the one or more recesses defining at least one circumferential channel. For example, the circumferential wall comprises multiple circumferential channels, each forming a continuous channel over the complete circumference, or one segmented circumferential channel. After mounting the flow distributor onto the intermediate structure, the one or more circumferential channels are in fluid communication with the radial channels, thereby defining a path to be followed by a cooling fluid, wherein the cooling fluid will flow in radial direction through the radial channels and in tangential direction through the circumferential channels. Typically, any of the circumferential channels is delimited at its top and bottom side by a ring-shaped edge, wherein, in mounted condition of the flow distributor, one of these edges is in contact with the top part of the intermediate structure and another one of the edges is in contact with the bottom part of the intermediate structure.

The method according to the fourth aspect allows for a modular concept, wherein a specific type of flow distributor may be mounted onto a standard intermediate structure, for realizing a specific flow pattern of the cooling fluid. This results in a flexible manufacturing method, wherein the flow pattern may easily be adapted depending on the desired cooling liquid or cooling requirements. Moreover, different from prior art clamshell solutions, the stator is manufactured in such a way that there is no split between two clamshells or between a clamshell and a lid. Conversely, in the invented method, the split is located between the ring-shaped intermediate structure and the flow distributor mounted at the outer or inner surface of the ring-shaped intermediate structure. The invented method therefore allows for an easier and improved sealing of the stator, wherein only seals at the edge between the intermediate structure and the flow distributor needs to be provided. The invented method thus contributes to an easier and cheaper assembly of the stator, while allowing for an increased durability of the machine.

Optionally, the method comprises: obtaining the intermediate structure via an injection moulding process, such that the stator elements are fixed in the moulded skeleton due to overmoulding. The injection moulding process may make use of a mould with movable spacers, as is the case in the method according to the first aspect of the invention, or may make use of a mould with static partitions. In both cases, the stator elements are overmoulded, thereby securing them in the skeleton.

Optionally, the method comprises: mounting the flow distributor on the intermediate structure by means of welding, gluing, or press fitting with an interference fit.

Optionally, the method comprises:
- obtaining the intermediate structure via an injection moulding process with a thermoplastic material, and
- sealing the flow distributor with respect to the intermediate structure by applying a laser weld.
When the skeleton of the intermediate structure is made of a thermoplastic material, a laser weld may be used to mount the flow distributor onto the skeleton. Laser welding is advantageous, as it allows for an easy connection while ensuring optimal sealing.

Optionally, the flow distributor comprises guiding features adapted to guide the cooling fluid, the guiding features comprising:
- blocking elements segmenting the at least one circumferential channel, the blocking elements being in contact with the intermediate structure in mounted condition of the flow distributor, thereby being adapted to block the flow of cooling fluid; and/or
- apertures through the circumferential wall, thereby forming a fluid passage for the cooling fluid between the at least one circumferential channel and one or more of the radial channels between adjacent stator elements.
The guiding features thus guide the cooling fluid along a specific path when circulating in the stator, thereby defining a specific flow pattern.

Optionally, the skeleton of the intermediate structure comprises a circumferential channel arranged coaxially with the inner and outer surface of the intermediate structure, the circumferential channel being a continuous channel or being segmented in multiple parts. The circumferential channel is in fluid communication with the radial channels, such that the flow pattern of the cooling fluid is defined by the flow distributor and the circumferential channel of the intermediate structure. This implies that, apart from the flow distributor, the flow pattern may be defined by a circumferential channel that makes part of the intermediate structure. Such a circumferential channel may e.g. be obtained during moulding of the intermediate structure, wherein the mould comprises one or more circumferential walls positioned between the inner and outer wall of the mould. In an embodiment, the circumferential channel of the skeleton is located between the front side of the stator elements and the inner surface of the intermediate structure, and a flow distributor is mounted onto the outer surface of the intermediate structure. In another embodiment, the circumferential channel is located between the back side of the stator elements and the outer surface of the intermediate structure, and a flow distributor is mounted onto the inner surface of the intermediate structure.

Optionally, the circumferential channel in the skeleton extends in axial direction, and ends at its top side or at its bottom side in a circular slit. The circular slit is provided in the top respectively bottom part of the skeleton, and is continuous across its circumference or is segmented. Moreover, the method further comprises: sealing the circular slit. Sealing the circular slit may e.g. be done by filling the slit with a sealing ring or another material.

Optionally, the flow distributor is a first flow distributor, and the method further comprises:
- providing a second flow distributor, the second flow distributor, the first flow distributor and the intermediate structure being provided as separate parts;
- mounting the first flow distributor on the outer surface of the intermediate structure,
- mounting the second flow distributor on the inner surface of the intermediate structure, wherein the second flow distributor comprises a circumferential wall arranged coaxially with respect to the intermediate structure when mounted, the circumferential wall comprising one or more recesses, thereby defining at least one circumferential channel in fluid communication with one or more of the radial channels,
wherein the first and second flow distributor are adapted to together define a flow pattern across the radial and circumferential channels when circulating a cooling fluid between the stator elements.

In this case, two different flow distributors are used, of which one is mounted onto the outer surface of the intermediate structure and the other one is mounted onto the inner surface of the intermediate structure. Typically, in such a case the intermediate structure does not comprise circumferential channels, but only comprises radial cooling channels, each of the radial cooling channels having two open ends.

According to a fifth aspect of the present invention, the above identified objectives are realized by a stator for an axial flux machine, the stator comprising:
- a ring-shaped intermediate structure, the intermediate structure comprising:
   ∘ a central axis corresponding to the axial direction;
   ∘ stator elements, any of the stator elements comprising a coil wound around a core, the stator elements being fixed in a skeleton;
   ∘ radial channels, wherein a radial channel is present between any pair of adjacent stator elements;
- a flow distributor, mounted on the inner or outer surface of the intermediate structure, by means of welding, gluing or press fitting, wherein:
   ∘ the flow distributor comprises a circumferential wall arranged coaxially with respect to the intermediate structure, the circumferential wall comprising one or more recesses, thereby defining at least one circumferential channel in fluid communication with one or more of the radial channels, and
   ∘ the flow distributor is adapted to define a flow pattern across the radial and circumferential channels when circulating a cooling fluid between the stator elements.

The ring-shaped intermediate structure may be obtained by the method according to the first aspect of the invention, or by any other method, e.g. by overmoulding the stator elements using a static mould, by injection moulding only the skeleton and mounting the stator elements afterwards, by casting the stator elements in a resin, etc. With respect to the ring-shaped intermediate structure and the flow distributor mentioned with respect to the stator according to the fifth aspect, the same definitions apply as above given with respect to the first, second and third aspect of the invention.

Optionally, the skeleton is provided as a single injection-moulded part, and the stator elements are fixed in the skeleton due to overmoulding. The intermediate structure may have been produced in a mould with movable spacers, or in a mould with static partitions. In both cases, the stator elements are overmoulded, thereby securing them in the skeleton

Optionally, the skeleton comprises a ring-shaped top part and bottom part, both parts being parallel and being orthogonal with respect to the axial direction, each of the radial channels being delimited by the top and bottom part of the skeleton. Moreover, the top and bottom part of the skeleton are in contact with the circumferential wall of the flow distributor, over its entire circumference.

Optionally, the cores of the stator elements extend through the top part and bottom part of the skeleton.

Optionally, the skeleton comprises multiple wall parts, every of the wall parts extending in axial direction and connecting the top part to the bottom part, the wall parts being spaced apart from one another, leaving an opening between adjacent wall parts. Any of the radial channels ends in an opening between adjacent wall parts. Moreover, at least some of the wall parts of the intermediate structure are in contact with the circumferential wall of the flow distributor.

Optionally, the flow distributor comprises a first circumferential channel serving as fluid supply channel, and a second circumferential channel serving as fluid draining channel. Typically, the first and second circumferential channel are two separate continuous channels, each placed at two different axial positions. The first and second circumferential channel are provided as a recess in the side of the circumferential wall facing away from the intermediate structure. The first circumferential channel comprises apertures, adapted to form a fluid passage from the first circumferential channel towards a first subset of the radial channels. Similarly, the second circumferential channel comprises apertures, adapted to form a fluid passage from a second subset of the radial channels towards the second circumferential channel.

Optionally, the flow distributor comprises connecting features arranged at the side of the circumferential wall facing away from the intermediate structure, the connecting features adapted to connect the flow distributor to a stator housing.

Optionally, the connecting features comprise grooves or notches located on the surface facing away from the intermediate structure, the grooves or notches being configured to form a tongue-and-groove connection with a stator housing

Optionally, the flow distributor comprises a segmented circumferential channel, provided as multiple separated recesses at the side of the circumferential wall facing the intermediate structure. Due to the segmentations, the circumferential channel is divided into multiple portions, such that over the circumference, circumferential channel portions are alternated with partitions. Any of the recesses is in fluid communication with at least one of the radial channels, such that fluid passages exist from the recesses towards the radial channels and from the radial channels towards the recesses.

### Brief Description of the Drawings

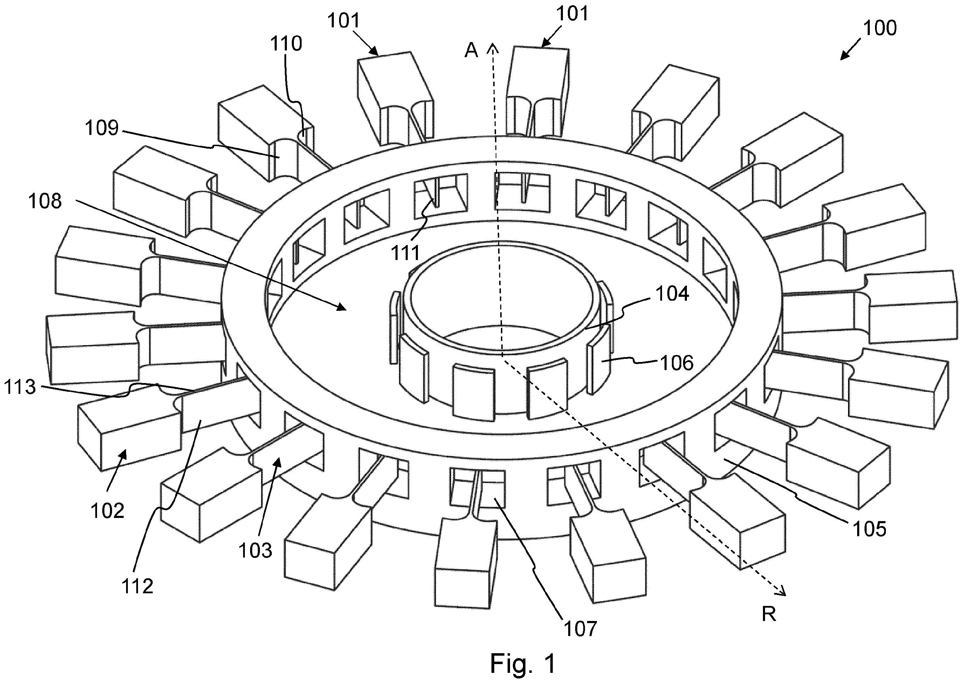

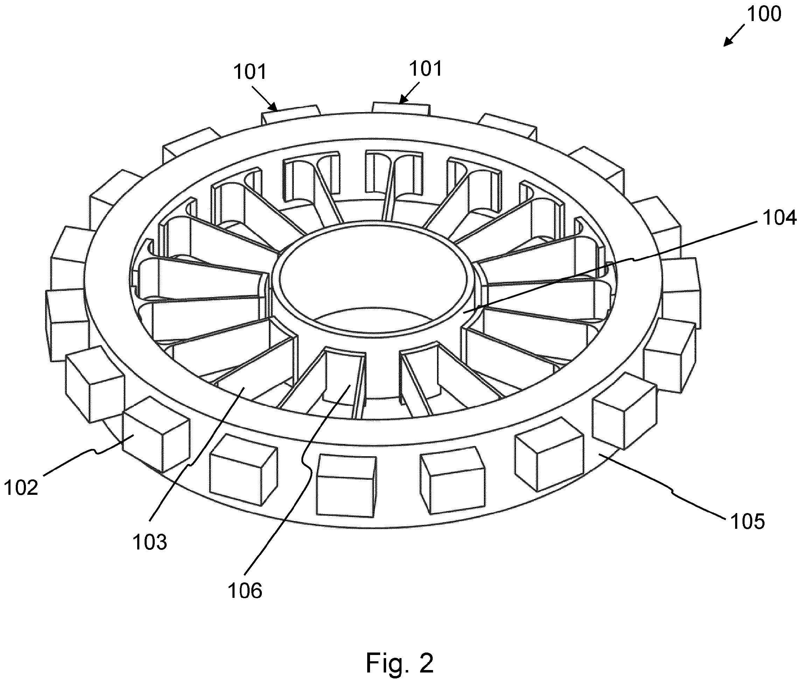

Fig. 1 an Fig. 2 show a mould with movable spacers according to an embodiment of the invention, the spacers being in retracted respectively inserted position.

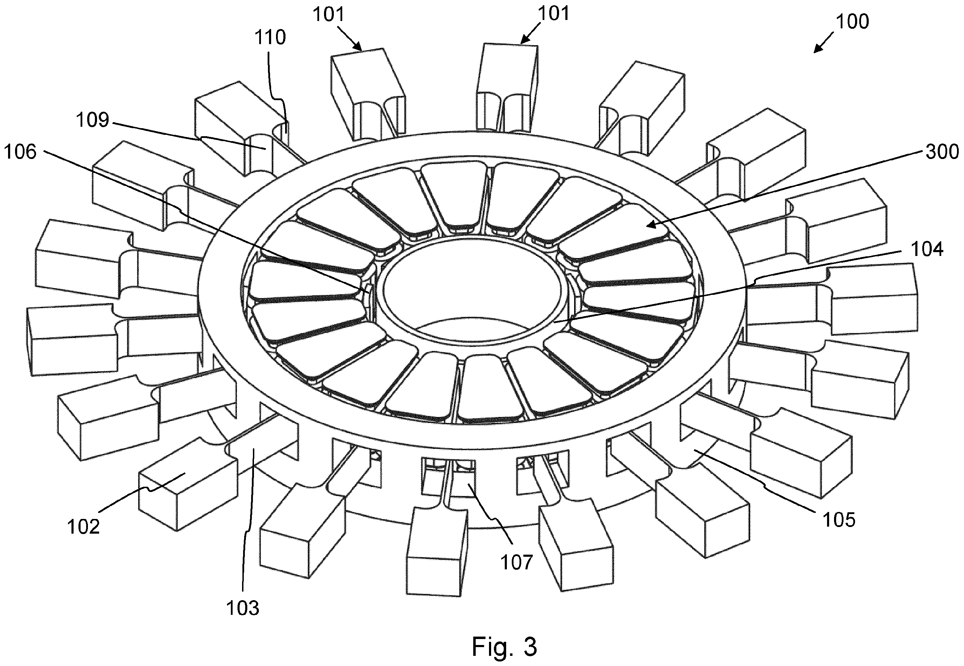

Fig. 3 to Fig. 9 illustrate a method for manufacturing a structure for a stator of an axial flux machine, according to an embodiment of the invention, using the mould of Fig. 1 and Fig. 2.

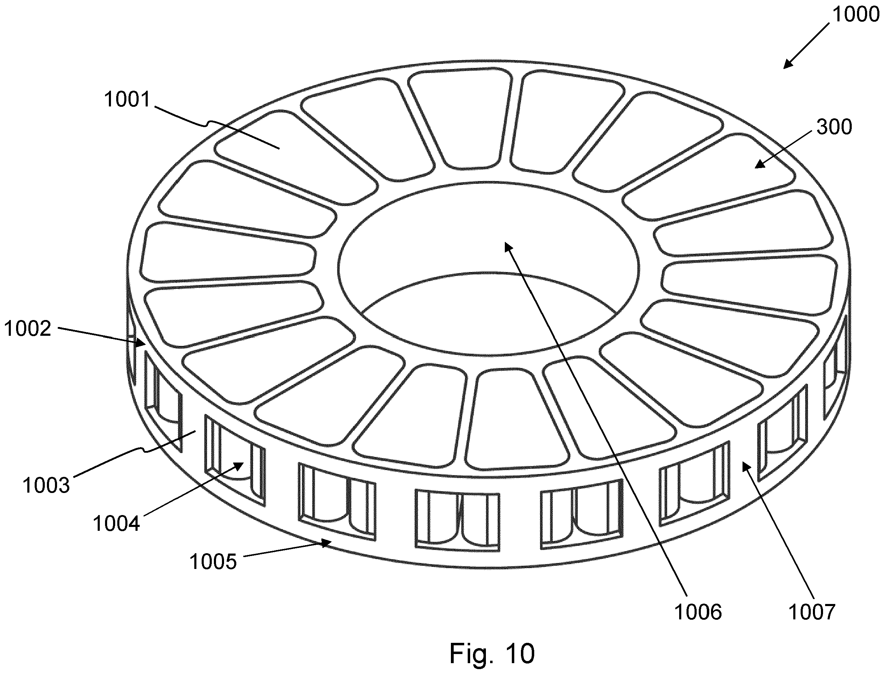

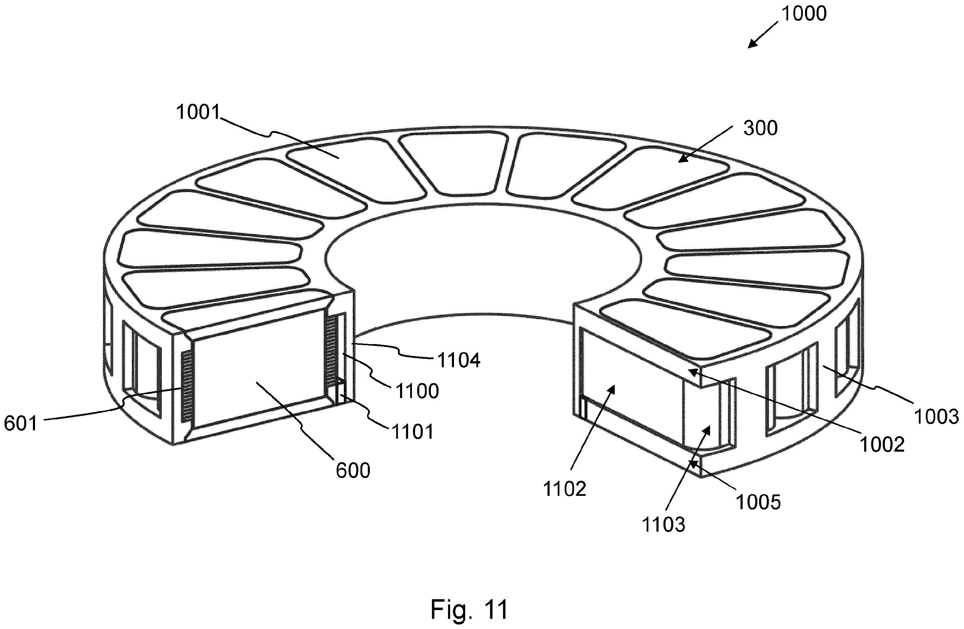

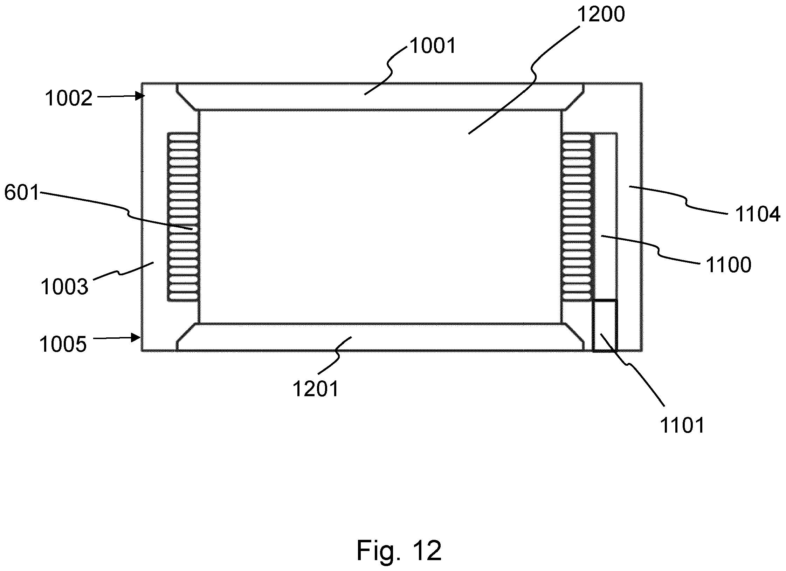

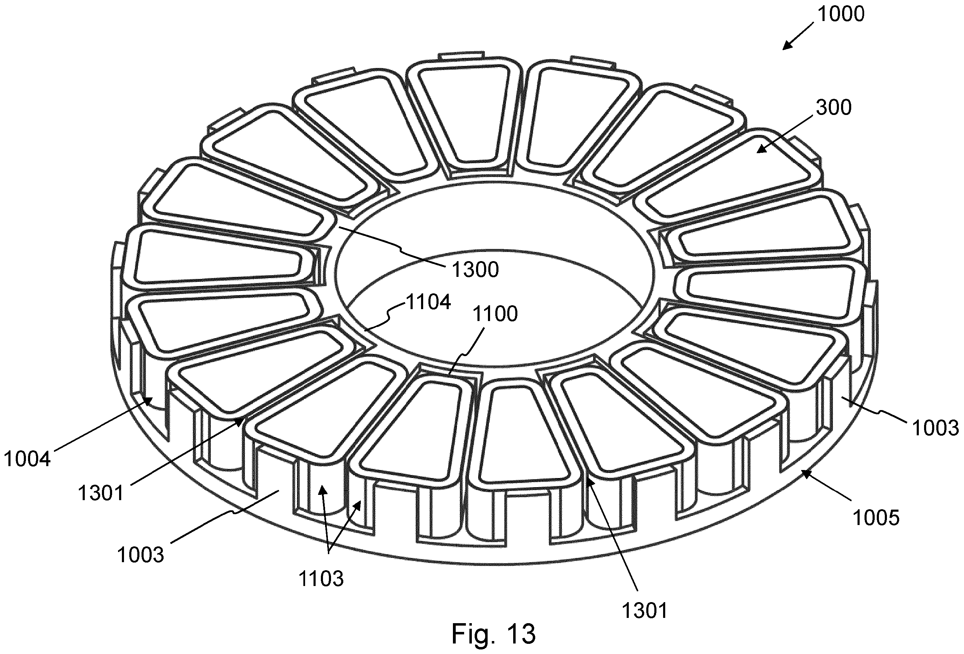

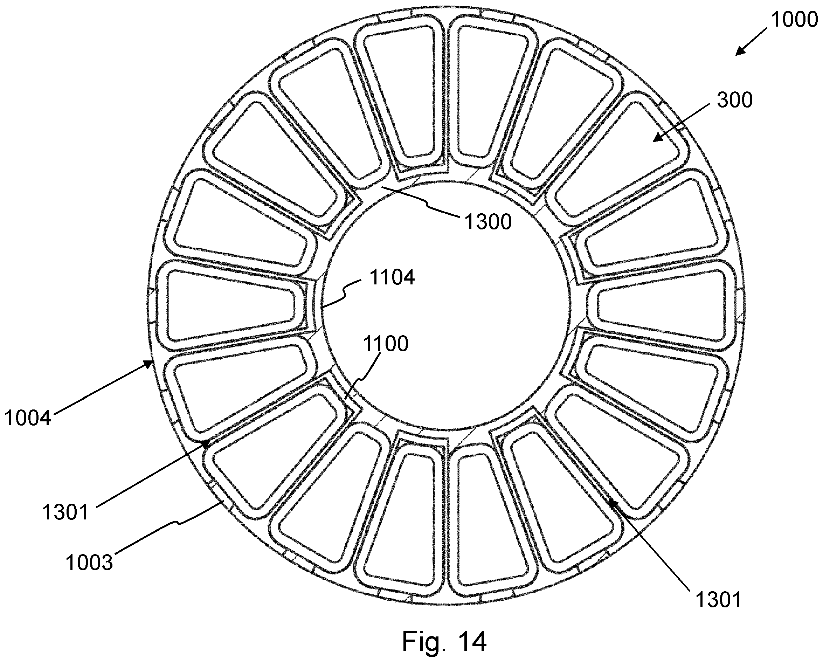

Fig. 10 to Fig. 14 show a structure obtained via the method illustrated in Fig. 3 to Fig. 9., according to an embodiment of the invention. Fig. 10 gives a 3D-view, Fig. 11 gives the 3D-view of Fig. 10 wherein a segment has been cut away, Fig. 12 gives a cross section according to a plane in radial direction, Fig. 13 gives the 3D-view of Fig. 10 wherein the top part has been cut away, Fig. 14 gives a cross section according to a plane perpendicular to the axial direction.

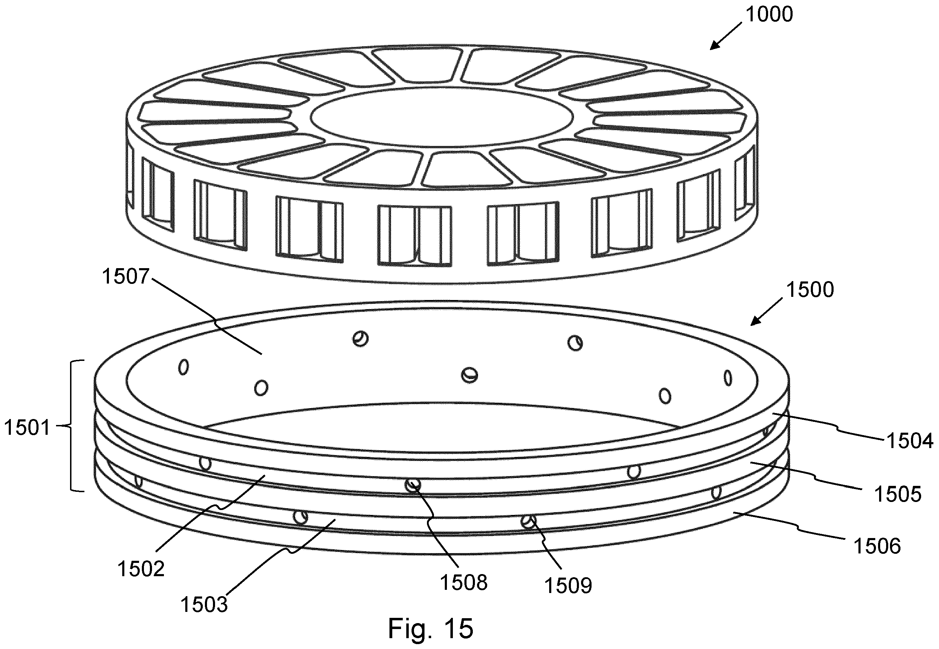

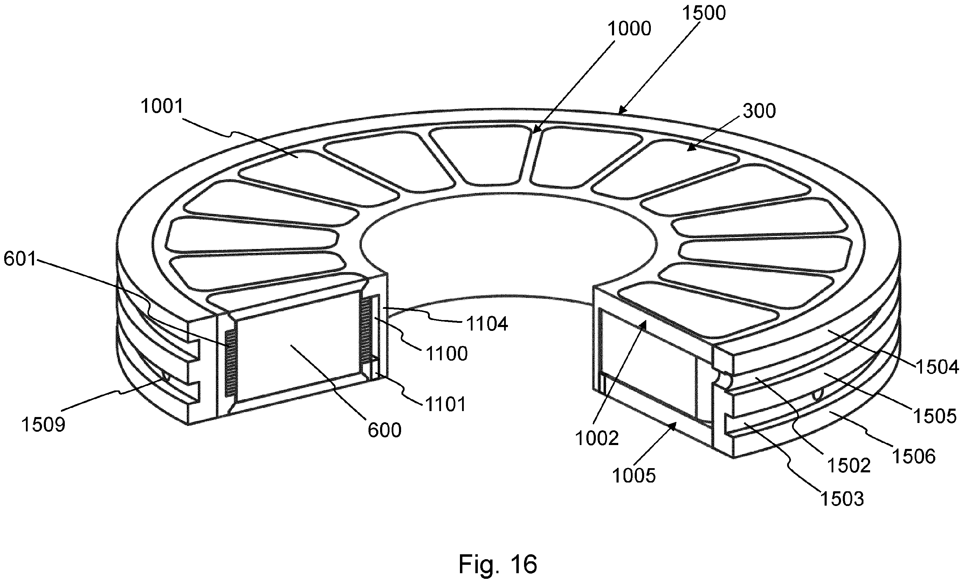

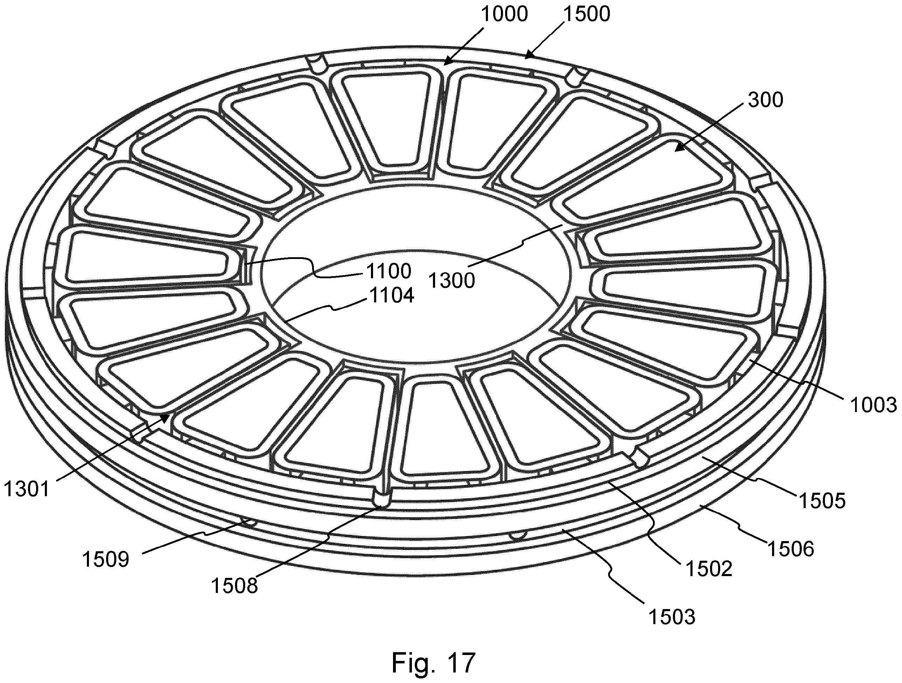

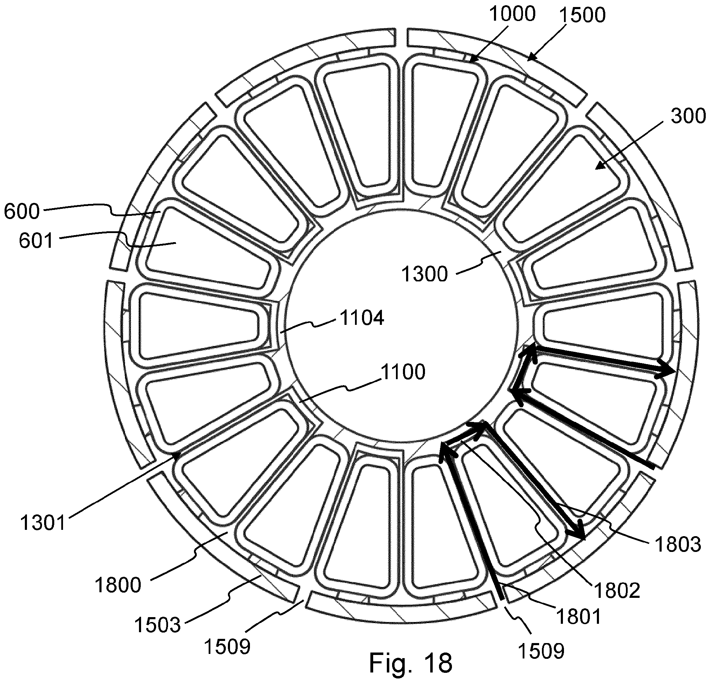

Fig. 15 gives a 3D-view of the structure of Fig. 10, together with a flow distributor according to a first embodiment of the invention. In Fig. 16 to Fig. 18 the flow distributor according to the first embodiment is mounted on the structure of Fig. 10. Fig. 16 gives a 3D-view wherein a segment has been cut away, Fig. 17 gives the 3D-view wherein the top part has been cut away, Fig. 18 gives a cross section according to a plane perpendicular to the axial direction.

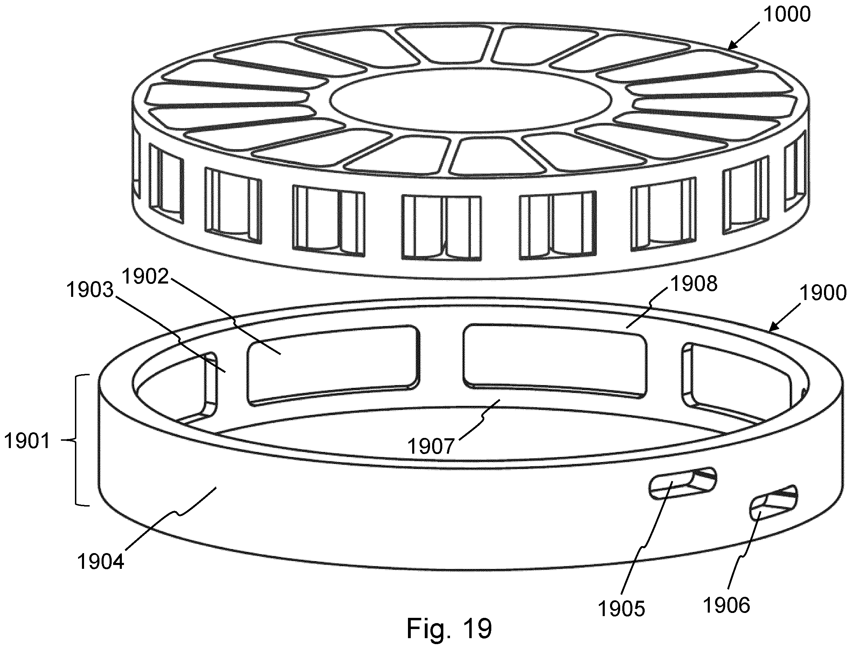

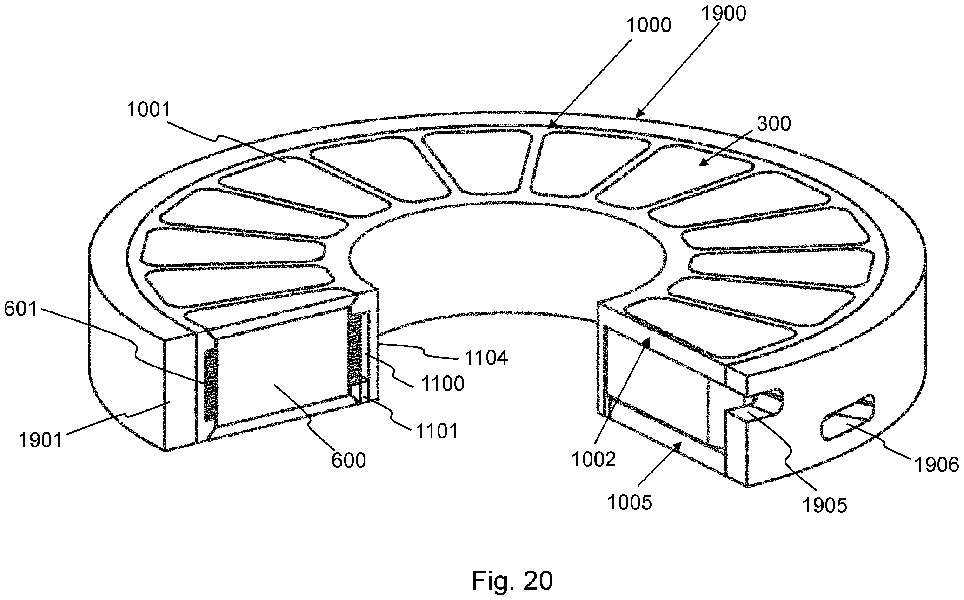

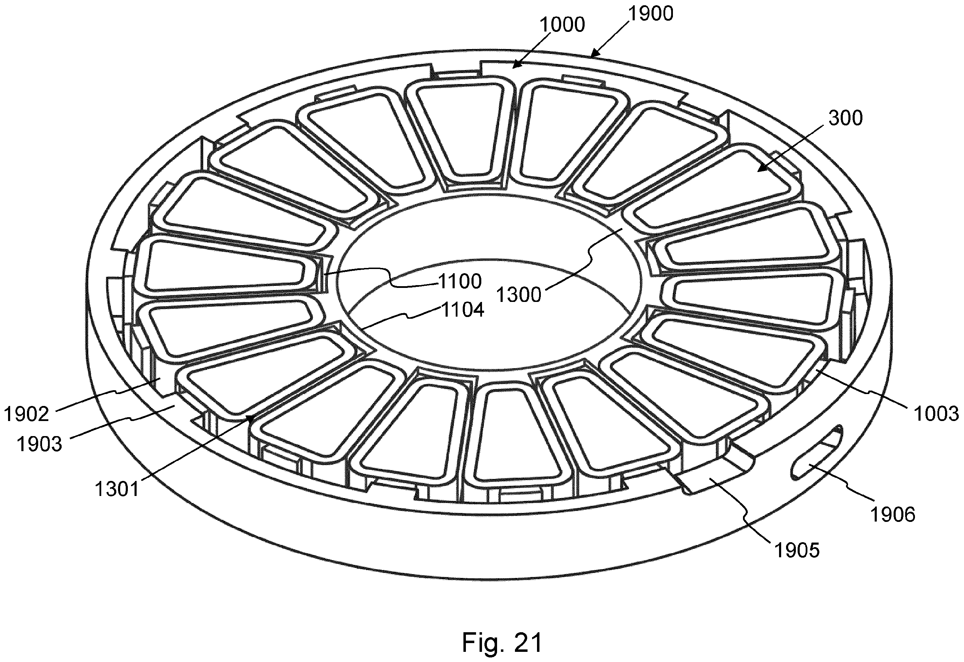

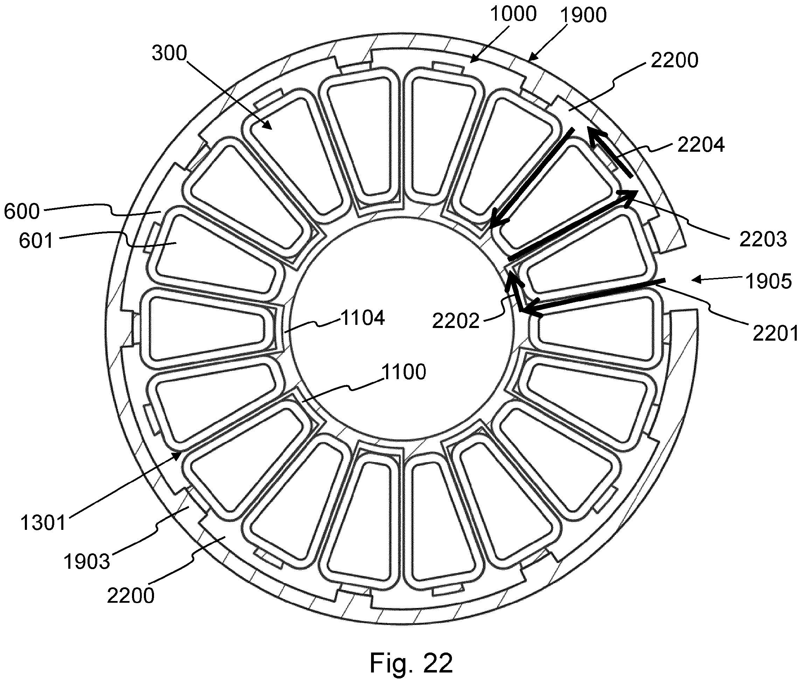

Fig. 19 gives a 3D-view of the structure of Fig. 10, together with a flow distributor according to a second embodiment of the invention. In Fig. 20 to Fig. 22 the flow distributor according to the second embodiment is mounted on the structure of Fig. 10. Fig. 20 gives a 3D-view wherein a segment has been cut away, Fig. 21 gives the 3D-view wherein the top part has been cut away, Fig. 22 gives a cross section according to a plane perpendicular to the axial direction.

### Detailed Description of Embodiment(s)

Fig. 1 illustrates a mould 100 according to an embodiment of the invention. The mould 100 comprises a static portion, the static portion comprising an outer wall 105 and a coaxially arranged inner wall 104, with a ring-shaped space 108 therebetween. The ring-shaped space 108 defines an axial and radial direction, indicated with 'A' and 'R' respectively in the figure. In the shown embodiment, the inner wall and outer wall are ring-shaped, each comprising two parallel cylindrical surfaces. The outer wall comprises rectangular openings 107, distributed along its circumference. In the shown embodiment, the static portion of the mould 100 further comprises circumferential walls 106, placed in the ring-shaped space 108, at a radial position closer to the inner wall 104 than to the outer wall 105. As can be seen from the figure, the circumferential walls 106 together define a segmented circumferential wall, arranged coaxially with the inner wall 104 and outer wall 105. Each circumferential wall 106 has a height, measured according to the axial direction smaller than the height of the inner wall 104, and is in contact with the bottom of the mould 100.

The mould 100 further comprises movable spacers 101. Any of the spacers 101 comprises an elongated portion 103, that extends in radial direction when mounted in the mould 100, any of the spacers 101 having a front side 111. In the shown embodiment, every elongated portion 103 comprises two flat side surfaces 112, 113, and any of the spacers 101 further comprises an end portion 102, attached to the back side of the elongated portion 103. The end portion 103 is block-shaped, having two curved front surfaces 109, 110. In an alternative embodiment, the spacer 101 may be divided along its length in two individual parts, that can be moved separately, each of the spacer parts having one curved front surface.

Every spacer 101 is movable with respect to the static portion of the mould 100. Moving a spacer 101 implies that it is slid in radial direction while keeping its axial position, thereby sliding through an opening 107 in the outer wall 105. Every spacer 101 can be displaced independently from the other spacers. In Fig. 1, all spacers 101 are in retracted condition, wherein only a front part of the elongated portion 103 is placed inside a hole 107. In Fig. 2, all spacers 101 are in inserted condition, wherein the front side 111 abuts against one of the circumferential walls 106. In particular, in inserted condition of the spacers, a first spacer 101 abuts with its front end 111 against a first edge of a particular circumferential wall 106, and a second spacer 101 abuts with its front end 111 against a second, opposing edge of that same circumferential wall 106. Furthermore, in inserted condition of a spacer 101, the end portion 102 is placed, at least partially, in a hole 107 of the outer wall 105. It is clear from the figure that the height and width of the end portion 102 is adapted to the corresponding dimensions of the hole 107, such that the spacer 101 is held in a stable position in inserted condition. Furthermore, the elongated portion 103 has the same height as the end portion 102, the height being measured in axial direction. The height of a spacer 101, is smaller than the height of the outer wall 105 and smaller than the height of the inner wall 104, the spacer 101 thus having a central axial position in the mould, leaving some space above and underneath the elongated portion 103.

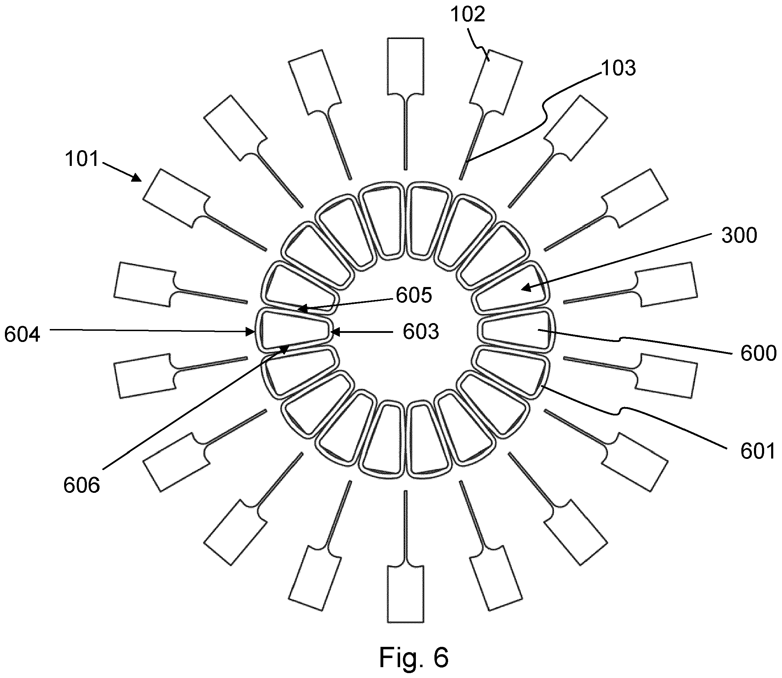

The mould 100 is used for manufacturing a structure 1000 for a stator of an axial flux machine. Fig. 3 illustrates a first step of the method, wherein stator elements 300 are positioned in the ring-shaped space 108 of the mould 100, any of the spacers 101 being in retracted condition. Every stator element 300 comprises a coil 601 wound around a core 600, as indicated in Fig. 6. Fig. 6 further shows that every stator element 300 has a front face 603, a back face 604, and two side faces 605, 606. Any of the cores 600 comprises a centrally positioned core bar 1200, and two pole shoes 1001, 1201, at opposing ends of the core bar 1200.

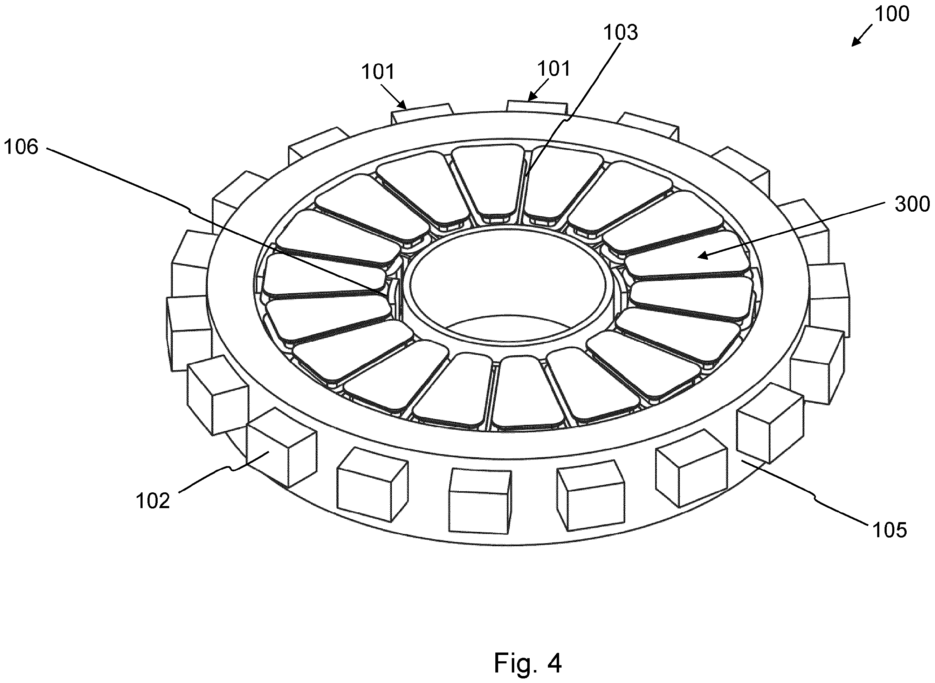

In a next step of the method, the spacers 101 are slid in radial direction, thereby inserting any of the elongated portions 103 between a pair of stator elements 300. The spacers 101 may be moved sequentially, one after the other, or may be moved simultaneously. While moving a spacer 101, its front end 111 moves forward, in between two adjacent coils, until the front surfaces 109, 110 of the end portion 102 come into contact with the coils. Further pressing a spacer 101 radially inwards may result in the two stator elements 300 being slightly moved forward, towards the centre of the mould 100. This may continue until the front end 111 of the elongated portion 102 abuts against a circumferential wall 106, thereby reaching its maximally inserted condition. Fig. 4 shows that, when all spacers 101 are in maximally inserted condition, the front face 603 of a first group of stator elements 300 lies closely to one of the circumferential walls 106. For the remaining group of stator elements 300, no circumferential wall 106 is present at their front face 603, and some space is left between the front face 603 of the stator elements 300 and the inner wall 104 of the mould 100. For any of the stator elements 300, in the state of Fig. 4, some open space is left between a portion of the back face 604 and the outer wall 105 of the mould 100.

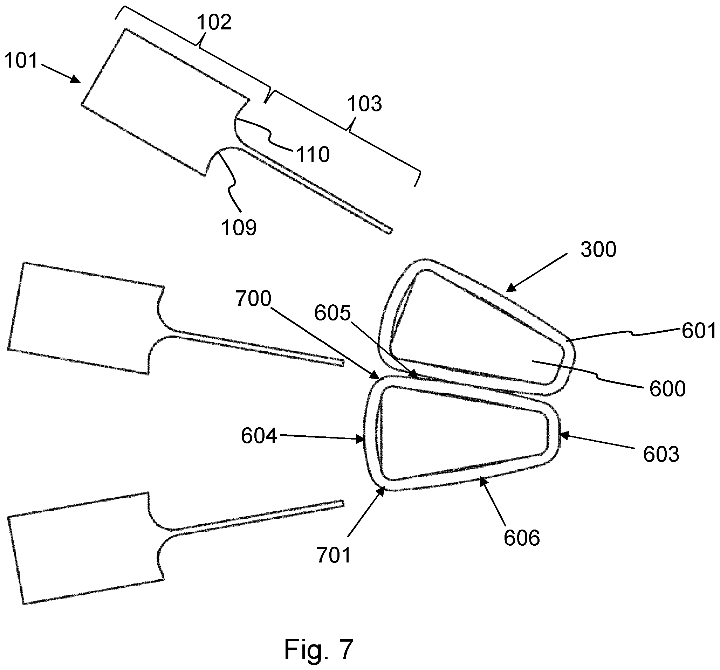

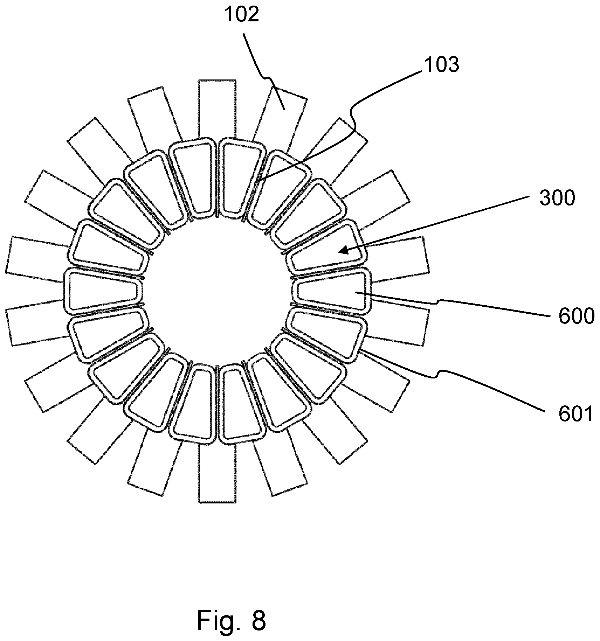

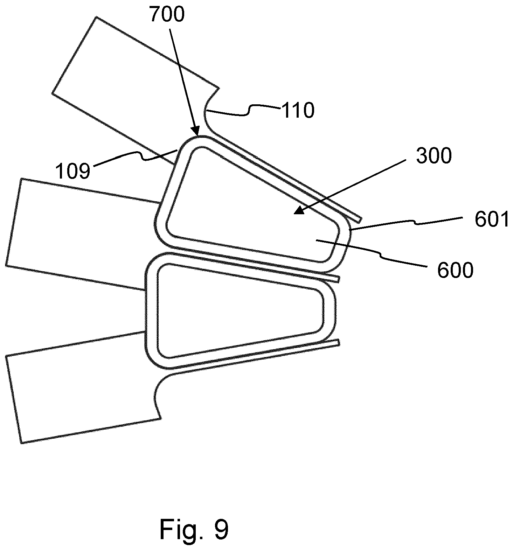

The step of sliding the spacers 101 is further illustrated in Fig. 6 to Fig. 9. In Fig. 6, all the spacers 101 are in retracted condition, corresponding to the condition of Fig. 3. Fig. 7 gives a detailed view of Fig. 6. In Fig. 8, all the spacers 101 are in maximally inserted condition, corresponding to the condition of Fig. 4. Fig. 9 gives a detailed view of Fig. 8. Fig. 6 and Fig. 7 show that before inserting the spacers 101, the coils 601 are in an uncompressed condition, wherein some gaps are left between the coil wires and the respective cores 600. When sliding a spacer 101 in radial direction, the elongated portion 103 is forced between two adjacent coils, thereby already compressing the wires of the coils to some extent.

Fig. 8 and Fig. 9 show that a spacer 101 is slid in radial direction until the front surfaces 109, 110 of the end portion 102 comes into contact with the corresponding pair of coils. In particular, the figures show that the curved surfaces 109, 110 have a shape adapted to conform to the rounded edges 700, 701 of the coils 601. Thus, in inserted condition, the curved surfaces 109, 110 are aligned with the rounded edges 700, 701. Further exerting a force onto the back side of the end portions 102, results in radially compressing the stator elements 300.

Due to radially compressing the stator elements 300, the wires of the coils 601 are compressed, thereby forcing the coils 601 into a shape wherein any gaps between the wires of the coils 601, and/or between the coil 601 and the core 600 are reduced or eliminated. This results in a higher copper fill factor. In the shown embodiment, wherein the stator elements 300 are not fixed in the mould 100, radially compressing the stator elements 300 also results in the stator elements 300 being slightly moved towards the centre of the mould 100. Such a movement causes the mutual distance between adjacent stator elements 300 to be reduced, thereby further contributing to compressing the wires of the coils 601. In another embodiment, it is also possible that initially enough space is available between adjacent coils for inserting the elongated portion therebetween, initially without any contact between the elongated portion and the coils. In such a case, once the stator elements are radially compressed by means of the end portions, the stator elements are moved towards the centre such that the coils are brought into contact with the elongated portions. In this way, any gaps between the coils and the elongated portion of the spacers are minimized or eliminated.

In any case, due to sliding the spacers 101 in radial direction, the stator elements 300 are brought in an optimal condition, wherein coil wires are maximally compressed, and stator elements 300 are pushed against the elongated portions 102. Also remark that such an optimal condition is reached without damaging the coil wires: either there is sufficient space between adjacent coils when inserting the elongated portions, or the elongated portion 102 may gradually be forced between two adjacent coils. For this purpose, the elongated portion may have a tip 111 which is rounded, chamfered or slightly tapered.

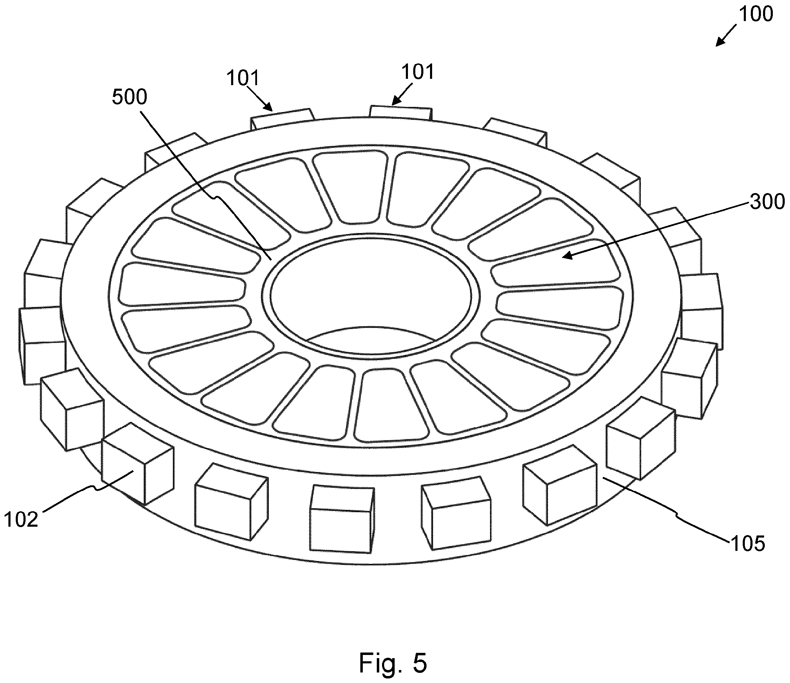

After having brought the spacers 101 in inserted condition, an injection moulding process is applied, wherein the mould is closed and filled with a molten material, e.g. plastics. During injection moulding, any empty region present inside the ring-shaped space 108 of the mould 100 is filled with injected material 500, as is illustrated in Fig. 5. In particular, empty regions at an axial position above and underneath the spacers 101 is filled with injected material 500, such that a top and bottom part 1002, 1005 are formed. Fig. 5 shows that due to the fact that the pole shoes 1001, 1201 protrude above and underneath the spacers 101, the pole shoes are not covered with injected material 500. During injection moulding, injected material comes into contact with portions of the stator elements 300, such that after solidification of the injected material, the stator elements 300 are fixed due to overmoulding.

Fig. 10 to Fig. 14 illustrate a structure 1000 as it is obtained with the above described method, after solidification of the injected material. The structure 1000 is a ring-shaped intermediate structure, having a cylindrical inner surface 1006 and a cylindrical outer surface 1007. The intermediate structure 1000 comprises a moulded skeleton, wherein the stator elements 300 are fixed due to overmoulding. The structure 1000 comprises a disk-shaped top part 1002, a disk-shaped bottom part 1005, and vertical wall parts 1003 connecting the top part 1002 to the bottom part 1005. It is clear that the top part, bottom part and vertical wall parts are not provided as separate components that were assembled afterwards, but merely refer to different portions of the moulded skeleton, the skeleton being a single moulded part. The wall parts 1003 are spaced apart from one another, leaving an opening 1004 between adjacent wall parts 1003. In the shown embodiment, the pole shoes 1001, 1201 of the stator elements 300 extend through the top and bottom part 1002, 1005 of the skeleton. The stator elements 300 are fixed to the moulded skeleton, in particular to the vertical wall parts 1003 and to the top 1002 and bottom part 1005, due to overmoulding.

Fig. 13 and Fig. 14 show that the intermediate structure 1000 comprises radial channels 1301, a radial channel 1301 being present between any pair of neighbouring stator elements 300. The radial channels 1301 are formed due to the spacers 101 being in inserted condition during moulding. The shape of the radial channels 1301 is thus defined by the shape of the spaces 101. In the shown embodiment, any of the radial channels 1301 is - at its top and bottom side - delimited by respectively the top part 1002 and bottom part 1005 of the skeleton. Furthermore, the sides of each radial channel 1301 are defined by portions of the sides of the stator elements 300. The latter sides are covered by a thin layer of moulded material, as can best be seen from Fig. 11, wherein the indicated surfaces 1102 and 1003 are surfaces covered with a thin layer of solidified injected material. The stator elements 300 are thus fully encapsulated in moulded material, with radial channels 1301 in between.

Every channel 1301 ends in an opening 1004 between adjacent wall parts 1003, and is funnel-shaped, the channel having an increasing width towards the outer surface 1007 of the intermediate structure 1000. The funnel-shaped channels 1301 are delimited by curved surfaces at their radial outer ends, of which the shape corresponds to the curved surfaces 109, 110 of the spacers 101.

At its opposite end, every radial channel 1301 ends in a circumferential channel 1100. The circumferential channels 1100 were formed due to the presence of the circumferential walls 106 in the mould 100. Directly after injection moulding, every circumferential channel 1100 extends in axial direction through the bottom part 1005, resulting in a segmented circular slit in the bottom part 1005 of the skeleton. Afterwards, the segmented circular slit was filled with a sealing material 1101. Furthermore, during injection moulding, the empty spaces between the front side of the stator elements 300 and the inner wall 104 of the mould 100, and between the respective circumferential walls 106 and the inner wall 104 of the mould, were filled with moulded material, resulting in a circumferential inner wall of the structure 100. As can be seen from the figures, this circumferential inner wall comprises thicker parts 1300 alternated with thinner parts 1104.

The radial channels 1301 are connected to the circumferential channels 1100, thereby defining a part of the path that will be followed by a cooling fluid when circulated between the stator elements 300. In this, a good exposure of the coils to the cooling fluid is obtained, due to the fact that only a thin covering layer covers the coils. In particular, the thickness of the thin covering layer 1102, 1103 is smaller than the thickness of the vertical wall parts 1003 and smaller than the thickness of the inner circumferential wall 1004. The funnel shape of the channels 1301 further contributes to such good exposure.

The final flow pattern of the cooling fluid in the stator is further defined by means of a flow distributor 1500, 1900. Therefore, as is illustrated in Fig. 15 to 22, a flow distributor 1500, 1900 is mounted onto the outer surface 1007 of the intermediate structure 1000. Fig. 15 to 18 illustrate a first possible embodiment of a flow distributor 1500, and Fig. 19 to 22 illustrate a second possible embodiment of a flow distributor 1900. The flow distributor 1500, 1900 is initially provided as a component separate from the intermediate structure 1000, and is then mounted onto the outer surface 1007 of the structure 1000.

The flow distributor 1500 comprises a circumferential wall 1501, arranged coaxially with respect to the ring-shaped intermediate structure 1000 when mounted. The circumferential wall 1501 comprises a first circumferential channel 1503 and a second circumferential channel 1502, both provided as continuous channel over the complete circumference of the circumferential wall 1501. The two channels 1503, 1502 are placed at the outer circumference of the wall 1501, each at another axial position. A ring-shaped edge 1505 is present between both channels 1503 and 1502. Furthermore, a ring-shaped edge 1504 defines the upper boundary of the channel 1502, and a ring-shaped edge 1506 defines the lower boundary of the channel 1503. The first respectively second circumferential channel 1503, 1502 comprises apertures 1509 resp. 1508, distributed along the circumference. A its inner circumference, the circumferential wall 1501 comprises a flat cylindrical surface 1507.

The flow distributor 1500 is mounted onto the outer surface 1007 of the intermediate structure 1000, such that the vertical wall parts 1003 of the intermediate structure 1000 are in contact with the cylindrical inner surface 1507 of the flow distributor 1500, and such that the top part 1002 and bottom part 1005 of the intermediate structure 1000 are in contact with the cylindrical inner surface 1507 of the flow distributor 1500. Connecting the flow distributor 1500 to the intermediate structure 1000, and sealing thereof, may happen by connecting the top and bottom part 1002, 1005 to the cylindrical inner surface 1507, e.g. by means of laser welding, and/or by connecting the vertical wall parts 1003 to the cylindrical inner surface 1507, e.g. by means of laser welding.

In mounted condition of the flow distributor 1500, the apertures 1509 in the first channel 1503 define fluid passages from the first channel 1503 towards a first subset of the radial channels 1301. Similarly, the apertures 1508 in the second channel 1502 define fluid passages from a second subset of the radial channels 1301 towards the second circumferential channel 1502. In this way, the flow distributor 1500 is adapted to define a flow pattern across the radial channels 1301 and circumferential channels 1100, as is schematically indicated with the arrows 1801, 1802, 1803. The channels 1502, 1503 and apertures 1509, 1508 of the flow distributor 1500, together with the radial channels 1301 and circumferential channels 1100 of the intermediate structure 1000, thus define the path to be followed when circulating a cooling fluid between the stator elements during operation of the machine. In this, the first channel 1503 serves as a fluid supply channel, for supplying cold cooling fluid to the stator elements, and the second channel 1502 serves as a fluid draining channel, for draining cooling fluid that was heated due to its passage between the stator elements.

Fig. 19 to Fig. 22 show another possible variant of a flow distributor 1900. The flow distributor 1900 comprises a circumferential wall 1901, arranged coaxially with respect to the ring-shaped intermediate structure 1000 when mounted. The circumferential wall 1901 comprises at its inner side a segmented circumferential channel, provided as multiple separated recesses 1902. Protrusions 1903 form partitions between respective recesses 1902. Ring-shaped edges 1907 and 1908 delimit the segmented channel 1902 at its lower respectively upper side. The partitions 1903 and edges 1907, 1908 together define a cylindrical inner surface of the flow distributor 1900. A its outer circumference, the circumferential wall 1901 comprises a flat cylindrical surface 1904. The flow distributor 1900 further comprises a supply port 1905 and a draining port 1906, provided as openings through the wall 1901.

The flow distributor 1900 is mounted onto the outer surface 1007 of the intermediate structure 1000, such that the vertical wall parts 1003 of the intermediate structure 1000 are in contact with the cylindrical inner surface 1903, 1908, 1907 of the flow distributor 1900, and such that the top part 1002 and bottom part 1005 of the intermediate structure 1000 are in contact with the cylindrical inner surface 1903, 1908, 1907 of the flow distributor 1900. Connecting the flow distributor 1900 to the intermediate structure 1000, and sealing thereof, may happen by connecting the top and bottom part 1002, 1005 to the edges 1908, 1907, e.g. by means of laser welding, and/or the by connecting the vertical wall parts 1003 to the partitions 1903, e.g. by means of laser welding.

In mounted condition of the flow distributor 1900, the recesses 1902 of the flow distributor 1900 define circumferential channels 2200, any of the circumferential channels 2200 in fluid communication with two radial channels 1301. In this way, the flow distributor 1900 defines a flow pattern wherein the cooling fluid flows from a radial channel 1301 towards a circumferential channel 2200, and vice versa, in an alternating way, as schematically indicated by the arrows 2201, 2202, 2203, 2204 in Fig. 22. The recesses 1902 and partitions 1903 of the flow distributor 1900, together with the radial channels 1301 and circumferential channels 1100 of the intermediate structure 1000, thus define the path to be followed when circulating a cooling fluid between the stator elements during operation of the machine. In this, the first port 1905 serves as a fluid supply port, for supplying cold cooling fluid to the stator elements, and the second port 1906 serves as a fluid draining port, for draining cooling fluid that was heated due to its passage between the stator elements.

The flow distributors 1500 and 1900 illustrate two possible embodiments; in other embodiments, however, other guiding features may be present in a flow distributor for defining yet another flow pattern. In any case, mounting a flow distributor onto an intermediate structure, wherein both are initially provided as separate components, results in a modular solution, with an increased flexibility in the stator assembly process.

The above described manufacturing method and products correspond to one possible embodiment of the invention. Compared to the above described method and products, alternatives are possible, however, still covered by the invention. In particular:
- Instead of having a mould 100 with circumferential walls 106 positioned closely to the inner wall 104, a mould could be used wherein circumferential walls are positioned closely to the outer wall 105. In this case, during injection moulding, the circumferential walls are positioned between the back side of the stator elements 300 and the outer wall 105, thereby forming circumferential channels at the outer circumference of the intermediate structure 1000, instead of circumferential channels 1100 at the inner circumference. Accordingly, a flow distributor can be mounted onto the inner surface 1006 of the intermediate structure, for completely defining the flow pattern. In such a case, no flow distributor is mounted onto the outer surface 1007 of the intermediate structure 1000.
- Instead of mounting a single flow distributor 1500, 1900, two flow distributors could be mounted, at the inner 1006 respectively outer surface 1007 of the intermediate structure 1000. In this case, the mould does not comprise circumferential walls 106, but an empty ring-shaped space between the inner wall 104 and outer wall 105. After injection moulding, an intermediate structure is obtained wherein any of the radial channels has two opposite open ends; one open end at the outer circumference of the structure and one open end at the inner circumference of the structure. The flow pattern at the inner and outer circumference are in this case defined by the two mounted flow distributors.
- Instead of manufacturing the intermediate structure 1000 with the above described method, using the mould 100 with movable spacers 101, an intermediate structure could be manufactured by another method. For example, the intermediate structure could be obtained by overmoulding the stator elements using a static mould, by injection moulding only the skeleton and mounting the stator elements afterwards, by casting the stator elements in a resin, etc. Still, independently from the method used for manufacturing the intermediate structure, one or two flow distributors can be mounted afterwards, thereby allowing for a modular solution.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for manufacturing a stator of an axial flux machine, the method comprising:
- providing a ring-shaped intermediate structure (1000), the intermediate structure (1000) comprising:
∘ a central axis corresponding to the axial direction;
∘ stator elements (300), any of the stator elements (300) comprising a coil (601) wound around a core (600), the stator elements (300) being fixed in a skeleton;
∘ radial channels (1301), wherein a radial channel (1301) is present between any pair of adjacent stator elements (300);
- providing a flow distributor (1500, 1900), the flow distributor (1500, 1900) and the intermediate structure (1000) being provided as separate parts;
- mounting the flow distributor (1500, 1900) on the inner (1006) or outer surface (1007) of the intermediate structure (1000), wherein:
∘ the flow distributor (1500, 1900) comprises a circumferential wall (1501, 1901) arranged coaxially with respect to the intermediate structure (1000) when mounted, the circumferential wall (1501, 1901) comprising one or more recesses (1502, 1503, 1902), thereby defining at least one circumferential channel in fluid communication with one or more of the radial channels (1301), and
∘ the flow distributor (1500, 1900) is adapted to define a flow pattern across the radial (1301) and circumferential channels (1502, 1503, 1902) when circulating a cooling fluid between the stator elements (300).

2. Method according claim 1, the method comprising:
obtaining the intermediate structure (1000) via an injection moulding process, such that the stator elements (300) are fixed in the moulded skeleton due to overmoulding.

3. Method according to any of the preceding claims, the method comprising:
mounting the flow distributor (1500, 1900) on the intermediate structure by means of welding, gluing, or press fitting with an interference fit.

4. Method according to any of the preceding claims, the method comprising:
- obtaining the intermediate structure (1000) via an injection moulding process with a thermoplastic material,
- sealing the flow distributor (1500, 1900) with respect to the intermediate structure (1000) by applying a laser weld.

5. Method according to any of the preceding claims,
wherein the flow distributor (1500, 1900) comprises guiding features adapted to guide the cooling fluid, the guiding features comprising:
- blocking elements (1903) segmenting the at least one circumferential channel, the blocking elements (1903) being in contact with the intermediate structure (1000) in mounted condition of the flow distributor (1900), thereby being adapted to block the flow of cooling fluid; and/or
- apertures (1508, 1509) through the circumferential wall (1501), thereby forming a fluid passage for the cooling fluid between the at least one circumferential channel (1502, 1503) and one or more of the radial channels (1301) between adjacent stator elements (300).

6. Method according to any of the preceding claims,
wherein the skeleton of the intermediate structure (1000) comprises a circumferential channel (1100) arranged coaxially with the inner (1006) and outer surface (1007) of the intermediate structure (1000), the circumferential channel being a continuous channel or being segmented in multiple parts (1100),
and wherein the circumferential channel (1100) is in fluid communication with the radial channels (1301), such that the flow pattern of the cooling fluid is defined by the flow distributor (1500, 1900) and the circumferential channel (1100) of the intermediate structure (1000).

7. Method according to claim 6,
wherein the circumferential channel (1100) in the skeleton extends in axial direction, and ends at its top side or at its bottom side in a circular slit (1101), the circular slit provided in the top part (1002) respectively bottom part (1005) of the skeleton and being continuous across its circumference or being segmented, and wherein the method further comprises: sealing the circular slit (1101).

8. Method according to claim 1 to 5,
wherein the flow distributor (1500, 1900) is a first flow distributor, and
wherein the method comprises:
- providing a second flow distributor, the second flow distributor, the first flow distributor (1500, 1900) and the intermediate structure being provided as separate parts;
- mounting the first flow distributor (1500, 1900) on the outer surface (1007) of the intermediate structure,
- mounting the second flow distributor on the inner surface of the intermediate structure, wherein the second flow distributor comprises a circumferential wall arranged coaxially with respect to the intermediate structure when mounted, the circumferential wall comprising one or more recesses, thereby defining at least one circumferential channel in fluid communication with one or more of the radial channels,
- wherein the first and second flow distributor are adapted to together define a flow pattern across the radial and circumferential channels when circulating a cooling fluid between the stator elements (300).

9. Stator for an axial flux machine, the stator comprising:
- a ring-shaped intermediate structure (1000), the intermediate structure (1000) comprising:
∘ a central axis corresponding to the axial direction;
∘ stator elements (300), any of the stator elements (300) comprising a coil (601) wound around a core (600), the stator elements (601) being fixed in a skeleton;
∘ radial channels (1301), wherein a radial channel (1301) is present between any pair of adjacent stator elements (300);
- a flow distributor (1500, 1900), mounted on the inner (1006) or outer surface (1007) of the intermediate structure (1000), by means of welding, gluing or press fitting, wherein:
∘ the flow distributor (1500, 1900) comprises a circumferential wall (1501, 1901) arranged coaxially with respect to the intermediate structure (1000), the circumferential wall (1501, 1901) comprising one or more recesses (1502, 1503, 1902), thereby defining at least one circumferential channel in fluid communication with one or more of the radial channels (1301), and
∘ the flow distributor (1500, 1900) is adapted to define a flow pattern across the radial (1301) and circumferential channels (1502, 1503, 1902) when circulating a cooling fluid between the stator elements (300).

10. Stator according to claim 9,
wherein the skeleton is provided as a single injection-moulded part, and the stator elements (300) are fixed in the skeleton due to overmoulding.

11. Stator according to claim 9 or 10,
wherein the skeleton comprises a ring-shaped top part (1002) and bottom part (1005), both parts (1002, 1005) being parallel and being orthogonal with respect to the axial direction, each of the radial channels (1301) being delimited by the top (1002) and bottom part (1005) of the skeleton,
and wherein the top (1002) and bottom part (1005) of the skeleton are in contact with the circumferential wall (1501, 1901) of the flow distributor (1500, 1900), over their entire circumference.

12. Stator according to claim 9 to 11,
wherein the skeleton comprises multiple wall parts (1003), every of the wall parts (1003) extending in axial direction and connecting the top part (1002) to the bottom part (1005), the wall parts (1003) being spaced apart from one another, leaving an opening (1004) between adjacent wall parts (1003), and any of the radial channels (1301) ending in an opening (1004) between adjacent wall parts (1003),
and wherein at least some of the wall parts (1003) of the intermediate structure (1000) are in contact with the circumferential wall (1501, 1901) of the flow distributor (1500, 1900).

13. Stator according to claim 9 to 12,
wherein the flow distributor (1500) comprises a first circumferential channel (1503) serving as fluid supply channel, and a second circumferential channel (1502) serving as fluid draining channel, the first (1503) and second circumferential channel (1502) provided as a recess in the side of the circumferential wall (1501) facing away from the intermediate structure (1000),
and wherein the first circumferential channel (1503) comprises apertures (1509), adapted to form a fluid passage from the first circumferential channel (1503) towards a first subset of the radial channels (1301),
and the second circumferential channel (1502) comprises apertures (1508), adapted to form a fluid passage from a second subset of the radial channels (1503) towards the second circumferential channel (1502).

14. Stator according to claim 13,
wherein the flow distributor (1500) comprises connecting features arranged at the side of the circumferential wall (1501) facing away from the intermediate structure (1000), the connecting features adapted to connect the flow distributor (1500) to a stator housing.

15. Stator according to claim 9 to 12,
wherein the flow distributor (1900) comprises a segmented circumferential channel, provided as multiple separated recesses (1902) at the side of the circumferential wall (1901) facing the intermediate structure (1000).
